(19)

Europäisches
Patentamt
European
Patent Office
Office européen
des brevets

(11) **EP 4 566 876 A1**

(12) **EUROPEAN PATENT APPLICATION**
published in accordance with Art. 153(4) EPC

(43) Date of publication:
**11.06.2025 Bulletin 2025/24**

(51) International Patent Classification (IPC):
**B60N 2/02** (2006.01)

(21) Application number: **23905862.1**

(22) Date of filing: **18.12.2023**

(52) Cooperative Patent Classification (CPC):
**B60N 2/02; B60R 1/062; B60R 16/037; B62D 1/18**

(86) International application number:
**PCT/CN2023/139365**

(87) International publication number:
**WO 2024/131698 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 CN 202211634012**

(71) Applicant: **Huawei Technologies Co., Ltd.
Shenzhen, Guangdong 518129 (CN)**

(72) Inventors:
• **LIU, Liu
Shenzhen, Guangdong 518129 (CN)**

• **XU, Yiran
Shenzhen, Guangdong 518129 (CN)**
• **HE, Zhenyi
Shenzhen, Guangdong 518129 (CN)**
• **YANG, Weitun
Shenzhen, Guangdong 518129 (CN)**
• **QIAO, Yixiang
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **METHOD FOR ADJUSTING SEAT IN VEHICLE, PARKING METHOD, AND RELATED DEVICE**

(57)     A method for adjusting a seat in a vehicle, a parking method, and a related device are provided. The method may be applied to the vehicle field. A vehicle may determine a first value of a distance between a first point in the vehicle and eyes of a user based on a first position of the eyes of the user and a position of the first point, where a position relationship between the first point and a seat in which the user is located is preset. The vehicle determines adjustment information of the seat based on the first value, and performs an adjustment operation on the seat based on the adjustment information of the seat. Because the position relationship between the first point and the seat in which the user is located is preset, the distance between the first point and the eyes of the user can represent size information of a body of the user. The adjustment information of the seat is determined based on the distance between the first point in the vehicle and the eyes of the user. This helps improve a degree of matching between an adjusted seat and a body size of the user.

| |
|---|
| Obtain a first position of eyes of a target user in a vehicle  201 |
| Obtain a position of a first point corresponding to the target user in the vehicle, where a position relationship between the first point and a seat in which the target user is located is preset  202 |
| Determine a first value of a distance between the first point and the eyes of the target user based on the first position and the position of the first point  203 |
| Determine, based on the first value, adjustment information of the seat in which the target user is located, and perform, based on the adjustment information of the seat in which the target user is located, an adjustment operation on the seat in which the target user is located  204 |

FIG. 2

## Description

This application claims priority to Chinese Patent Application No. 202211634012.0, filed with the China National Intellectual Property Administration on December 19, 2022 and entitled "METHOD FOR ADJUSTING SEAT IN VEHICLE, PARKING METHOD, AND RELATED DEVICE", which is incorporated herein by reference in its entirety.

## TECHNICAL FIELD

This application relates to the vehicle field, and in particular, to a method for adjusting a seat in a vehicle, a parking method, and a related device.

## BACKGROUND

With the improvement of the economic level, the intelligent level of vehicles is also continuously improved. Currently, a seat in a vehicle is adjusted in a manual adjustment manner in most steps, that is, a user needs to manually adjust the seat.

However, in a process in which the user manually adjusts the seat, the user usually needs to repeatedly adjust the seat, and the seat adjustment process is relatively complex. Therefore, a solution for automatically adjusting a seat in a vehicle needs to be launched urgently.

## SUMMARY

This application provides a method for adjusting a seat in a vehicle, a parking method, and a related device. Because a position relationship between a first point and a seat in which a user is located is preset, a distance between the first point and eyes of the user can represent size information of a body of the user. Adjustment information of the seat is determined based on the distance between the first point in a vehicle and the eyes of the user. This helps improve a degree of matching between an adjusted seat and a body size of the user.

To resolve the foregoing technical problem, this application provides the following technical solutions.

According to a first aspect, this application provides a method for adjusting a seat in a vehicle, which may be applied to the vehicle field. A vehicle obtains a first position of eyes of a user in a vehicle and a position of a first point in the vehicle, where a position relationship between the first point and a seat in which the user is located is preset, that is, the position of the first point corresponding to a target user is determined based on a position of a seat in which the target user is located. The first point may be a point at a preset position on the seat in which the target user is located, or the first point may be a point obtained by shifting a point at a preset position on the seat in which the target user is located, or the like. The vehicle determines a first value of a distance between the first point and the eyes of the user based on the first position and the position of the first point; and determines adjustment information of the seat based on the first value. The vehicle performs an adjustment operation on the seat based on the adjustment information of the seat.

In this implementation, the adjustment information of the seat is determined based on the value parameter of the distance between the first point in the vehicle and the eyes of the user, and the adjustment operation is automatically performed on the seat based on the adjustment information of the seat. In other words, a solution for automatically adjusting a seat in a vehicle is provided. In addition, because the position relationship between the first point and the seat in which the user is located is preset, the distance between the first point and the eyes of the user can represent size information of a body of the user. The adjustment information of the seat is determined based on the distance between the first point in the vehicle and the eyes of the user. This helps improve a degree of matching between an adjusted seat and a body size of the user.

Optionally, the first point represents a position of a tailbone when the user sits in the seat, and the first value represents an eye height of the user in a sitting posture. For example, the "position of the tailbone when the target user sits in the seat" may also be understood as a "connection point between a torso and a thigh of the target user", that is, a hip point (hip point) of the target user.

The position of the first point is calculated based on a movement parameter of the seat. The movement parameter of the seat includes a movement parameter of a current position of the seat relative to a preset position of the seat. The movement parameter may include a first movement parameter and/or a second movement parameter. The first movement parameter indicates a movement distance, in the longitudinal direction of the vehicle, of the seat in which the target user is located, and the second movement parameter indicates a movement distance, in a perpendicular direction of the vehicle body floor, of the seat in which the target user is located. The first point may be a point at a preset position on the seat in which the target user is located, or the first point may be a point obtained by shifting a point at a preset position on the seat in which the target user is located.

For example, the first point may be an intermediate point of a folding line between the backrest and the cushion of the seat in which the target user is located. Alternatively, the first point may be a point obtained by shifting the intermediate point in the longitudinal direction of the vehicle and the perpendicular direction of the vehicle body floor. Because the target user may not be closely attached to the seat, the point obtained by shifting the intermediate point may be closer to a real position of a point H of the user. Alternatively, the first point may be a point obtained by shifting the intermediate point in the horizontal direction of the vehicle.

In this implementation, if the first point represents the position of the tailbone when the target user sits in the seat, the value of the distance between the first point and the eyes of the user may represent the eye height of the target user in the sitting posture. This improves a degree of combination between this solution and an actual application scenario, and helps reduce implementability of this solution. In addition, the position of the first point is calculated based on the movement parameter of the seat, thereby reducing difficulty in obtaining the position of the first point.

Optionally, a first mapping relationship is configured in the vehicle, the first mapping relationship indicates one or more lower limb sizes corresponding to each of a plurality of value parameters of a first distance, and the first distance indicates the distance between the first point and the eyes of the user. That the vehicle determines the adjustment information of the seat based on the first value of the distance between the first point and the eyes of the user may include: The vehicle obtains, based on the first mapping relationship, one or more lower limb sizes corresponding to the first value; and determines the adjustment information of the seat based on the first value of the distance between the first point and the eyes of the user and the one or more lower limb sizes corresponding to the first value. Optionally, when the first mapping relationship indicates a plurality of lower limb sizes corresponding to each value parameter of the first distance, and the plurality of lower limb sizes may include lower limb sizes corresponding to each value parameter of the first distance in a plurality of age brackets, in an implementation, the vehicle may obtain the lower limb size of the target user from the first mapping relationship based on the first value of the distance between the first point in the vehicle and the eyes of the target user and the gender and/or the age of the target user. In another implementation, the vehicle may obtain a plurality of lower limb sizes corresponding to the first value from the first mapping relationship, and perform a preset operation on the plurality of lower limb sizes to obtain the lower limb size of the target user. The preset operation may be averaging, taking a median, taking a maximum value, another operation, or the like.

In this implementation, not only the first value of the distance between the first point and the eyes of the target user is obtained, but also the lower limb size of the target user may be obtained, to determine, by combining the first value and the lower limb size of the target user, the adjustment information of the seat in which the target user is located. In other words, when the adjustment information of the seat in which the target user is located is determined, not only the size information of the upper body of the target user is considered, but also size information of the lower limb of the target user is considered. This helps further improve a degree of matching between an adjusted seat and the body size of the user. In addition, the first mapping relationship is deployed in the vehicle, and the lower limb size corresponding to the first value is obtained based on the first mapping relationship.

This helps quickly obtain the lower limb size of the target user, thereby helping accelerate adjustment of the seat in which the target user is located.

Optionally, if the user is a driver, when the user is located in the seat on which the adjustment operation has been performed, and a foot of the user is placed on an accelerator pedal in the vehicle, an included angle between a calf and an instep of the user is within a first preset range, and/or an included angle between the calf of the user and a first straight line is within a second preset range, where the first straight line is perpendicular to a vehicle body floor of the vehicle. In this implementation, in a vehicle driving process, the foot of the driver is placed on the accelerator pedal for a long time. A position and a shape of the accelerator pedal in the vehicle are fixed. It is pre-specified that the included angle between the calf and the instep of the user is within the first preset range, and/or the included angle between the calf of the user and the first straight line is within the second preset range. The adjustment information of the seat in which the driver is located may be determined with reference to the first preset range and/or the second preset range. Therefore, in the vehicle driving process, the included angle between the calf and the instep of the driver can be within the first preset range, and/or the included angle between the calf of the user and the first straight line can be within the second preset range. This helps implement comfort of the calf of the driver in the driving process, and helps improve safety in the driving process when the driver is in a comfortable driving state.

Optionally, when the user is a driver, the method further includes: The vehicle may determine a first area in the vehicle. When the eyes of the user are in the first area, it indicates that a field of view of the user satisfies a driving safety constraint. For example, the "first area" may also be referred to as an "eye-zone (eye-zone)". For example, the "driving safety constraint" may include: An upper limit of a field of view of the driver sitting in the seat may be that the driver can see at least the top of an object whose distance from the eyes of the driver is N meters and whose height is M meters, and a lower limit of the field of view of the driver sitting in the seat may include that the driver can see the ground whose distance from a vehicle head is greater than or equal to J meters. Values of N, M, and J are all positive numbers.

That the vehicle determines the adjustment information of the seat based on the first value of the distance between the first point and the eyes of the user includes: The vehicle determines the adjustment information of the seat based on the first value and the first area, where when the user is located in the seat on which an adjustment operation has been performed, the eyes of the user are in the first area. Optionally, when the driver is located in the seat on which the adjustment operation has been performed, the eyes of the driver may be at a central position in the first area; or when the driver is located in the seat on which the adjustment operation has been performed, the eyes of the driver may be at another position in the first area.

In this implementation, the first area in the vehicle may be further determined, and the adjustment information of the seat is determined based on the first area and the first value of the distance between the first point and the eyes of the driver. When the driver is located in the seat on which the adjustment operation has been performed, the eyes of the driver are in the first area. When the eyes of the driver are in the first area, it indicates that a field of view of the driver satisfies a driving safety constraint. That is, when the adjustment information of the seat in which the driver is located is determined, not only the size information of the body of the driver is considered, but also safety of the driver in the adjusted seat is considered. This helps improve safety in a driving process.

Optionally, after the vehicle performs the adjustment operation on the seat based on the adjustment information of the seat, the method further includes: The vehicle obtains a second position of the eyes of the user, where the second position is a position of the eyes when the user is located in the seat on which the adjustment operation has been performed, the first position is a position of the eyes of the user when the adjustment operation has not been performed, and the second position is calculated based on the first position and the adjustment information of the seat in which the user is located; and the vehicle determines adjustment information of a rear view mirror of the vehicle based on the second position of the eyes of the user.

In this implementation, after the adjustment operation is performed on the seat of the driver, if the driver adjusts the rear view mirror, a safety risk in a driving process is likely to occur. In this solution, the adjustment information of the rear view mirror of the vehicle may be further determined based on the position of the eyes when the driver is located in the seat on which the adjustment operation has been performed, so that the rear view mirror of the vehicle can be automatically adjusted based on an actual position of the eyes of the driver in the vehicle, thereby helping improve safety in the driving process. In addition, the second position of the eyes of the user is calculated based on the first position of the eyes of the user. This reduces difficulty in obtaining the second position.

Optionally, if the user is a driver, after the vehicle performs the adjustment operation on the seat based on the adjustment information of the seat, the method further includes: The vehicle determines adjustment information of a steering wheel of the vehicle based on a second position of the eyes of the user, where the second position is a position of the eyes when the user is located in the seat on which the adjustment operation has been performed, and the first position is a position of the eyes of the user when the adjustment operation has not been performed. The vehicle performs an adjustment operation on the steering wheel of the vehicle based on the adjustment information of the steering wheel.

After the adjustment operation is performed on the steering wheel, a field of view of the user satisfies a first constraint condition, and/or an upper limb of the user satisfies a second constraint condition, where the first constraint condition is related to driving safety of the user, and the second constraint condition is related to driving comfort of the upper limb of the user. To ensure that the upper limb of the driver (that is, the target user sitting in the driver seat) satisfies the second constraint condition after the adjustment operation is performed on the steering wheel, a second distance between a shoulder point of the driver and an upper edge point of the steering wheel needs to be less than or equal to a length of an arm of the driver, and a difference between the length of the arm of the driver and the second distance needs to be less than or equal to a length threshold.

In this embodiment of this application, after the adjustment operation is performed on the seat of the driver, automatic adjustment of the steering wheel may be further triggered based on the position of the eyes when the driver is located in the seat on which the adjustment operation has been performed. This helps improve safety and/or comfort in the driving process.

Optionally, the method further includes: The vehicle obtains a body thickness of the user, and determines a distance threshold between a first door of the vehicle and a closest obstacle and/or a minimum angle threshold of the first door of the vehicle based on the body thickness of the user, where the first door includes a door closest to the user in a plurality of doors of the vehicle, and the distance threshold indicates a minimum distance between the first door and the closest obstacle after a parking operation is completed.

In this implementation, when the vehicle is parked, the user on the vehicle may fail to open a door of the vehicle to get off although the vehicle is parked. In this solution, a body thickness of at least one user on the vehicle is obtained, and the distance threshold between the first door of the vehicle and the closest obstacle is determined based on the body thickness of the user. The first door includes a door that is closest to the user in the plurality of doors of the vehicle. In other words, space required when the user gets off the vehicle is estimated, to improve a probability that the user successfully gets off the vehicle, and improve user experience in this solution.

Optionally, that the vehicle obtains the body thickness of the user includes: The vehicle obtains the body thickness of the user based on the first value. In this implementation, the body thickness of the user is obtained based on the first value of the distance between the first point and the eyes of the user. Because the first value is obtained in advance, the body thickness of the user can be quickly obtained.

According to a second aspect, this application provides a parking method, which may be applied to the vehicle field. A vehicle obtains a body thickness of a user in the vehicle; and determines a distance threshold between a first door of the vehicle and a closest obstacle based on the body thickness of the user, where the first door includes a door closest to the user in a plurality of doors of the vehicle, and the distance threshold indicates a minimum distance between the first door and the closest obstacle after a parking operation is completed.

**In** the second aspect, the vehicle may further perform the steps performed by the vehicle in the first aspect and the possible implementations of the first aspect. For specific implementation steps of the second aspect and the possible implementations of the second aspect of this application and beneficial effects brought by each possible implementation, refer to the descriptions in the possible implementations of the first aspect. Details are not described one by one herein again.

According to a third aspect, this application provides an apparatus for adjusting a seat in a vehicle, which may be used in the vehicle field. The apparatus includes: an obtaining module, configured to obtain a first position of eyes of a user in a vehicle and a position of a first point in the vehicle, where a position relationship between the first point and a seat in which the user is located is preset; a determining module, configured to determine a first value of a distance between the first point and the eyes of the user based on the first position and the position of the first point, where the determining module is further configured to determine adjustment information of the seat based on the first value; and an adjustment module, configured to perform an adjustment operation on the seat based on the adjustment information of the seat.

In the third aspect, the apparatus for adjusting a seat in a vehicle may further perform the steps performed by the vehicle in the first aspect and the possible implementations of the first aspect. For specific implementation steps of the third aspect and the possible implementations of the third aspect of this application and beneficial effects brought by each possible implementation, refer to the descriptions in the possible implementations of the first aspect. Details are not described one by one herein again.

According to a fourth aspect, this application provides a parking apparatus, which may be used in the autonomous driving field in the artificial intelligence field. The apparatus includes: an obtaining module, configured to obtain a body thickness of a user in a vehicle; and a determining module, configured to determine a distance threshold between a first door of the vehicle and a closest obstacle based on the body thickness of the user, where the first door includes a door closest to the user in a plurality of doors of the vehicle, and the distance threshold indicates a minimum distance between the first door and the closest obstacle after a parking operation is completed.

In the fourth aspect, the parking apparatus may further perform the steps performed by the vehicle in the second aspect and the possible implementations of the second aspect. For specific implementation steps of the fourth aspect and the possible implementations of the fourth aspect of this application and beneficial effects brought by each possible implementation, refer to the descriptions in the possible implementations of the second aspect. Details are not described one by one herein again.

According to a fifth aspect, this application provides a vehicle, which may include a memory, a processor, and a bus system. The memory is configured to store a program, and the processor is configured to execute the program in the memory, including the following step: The bus system is configured to connect the memory and the processor, so that the memory and the processor communicate with each other.

In the fifth aspect of this application, the processor may be further configured to perform the steps performed by the vehicle in the possible implementations of the first aspect. For details, refer to the first aspect. Details are not described herein again.

According to a sixth aspect, this application provides a computer-readable storage medium. The computer-readable storage medium stores a computer program, and when the computer program is run on a computer, the computer is enabled to perform the method according to the first aspect or the second aspect.

According to a seventh aspect, this application provides a circuit system. The circuit system includes a processing circuit, and the processing circuit is configured to perform the method according to the first aspect or the second aspect.

According to an eighth aspect, this application provides a computer program. When the computer program is run on a computer, the computer is enabled to perform the method according to the first aspect or the second aspect.

According to a ninth aspect, this application provides a chip system. The chip system includes a processor, configured to support a server or an apparatus for adjusting a seat in a vehicle in implementing functions in the foregoing aspects, for example, sending or processing data and/or information in the foregoing methods. In a possible design, the chip system further includes a memory. The memory is configured to store program instructions and data that are necessary for the server or a communication device. The chip system may include a chip, or may include a chip and another discrete component.

**BRIEF DESCRIPTION OF DRAWINGS**

FIG. 1 is a diagram of a structure of a vehicle according to an embodiment of this application;
FIG. 2 is a schematic flowchart of a method for adjusting a seat in a vehicle according to an embodiment of this application;
FIG. 3 is another schematic flowchart of a method for adjusting a seat in a vehicle according to an embodiment of this application;

FIG. 4 is a diagram of a first coordinate system according to an embodiment of this application;

FIG. 5 is a diagram of a first area according to an embodiment of this application;

FIG. 6 is a diagram of determining adjustment information of a seat in which a driver is located according to an embodiment of this application;

FIG. 7 is a diagram of a support shaft direction of a steering wheel according to an embodiment of this application;

FIG. 8 is a diagram of a relationship between a body thickness of a driver and a driver's door according to an embodiment of this application;

FIG. 9 is a diagram of a structure of an apparatus for adjusting a seat in a vehicle according to an embodiment of this application;

FIG. 10 is a diagram of a structure of a parking apparatus according to an embodiment of this application; and

FIG. 11 is a diagram of another structure of a vehicle according to an embodiment of this application.

## DESCRIPTION OF EMBODIMENTS

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

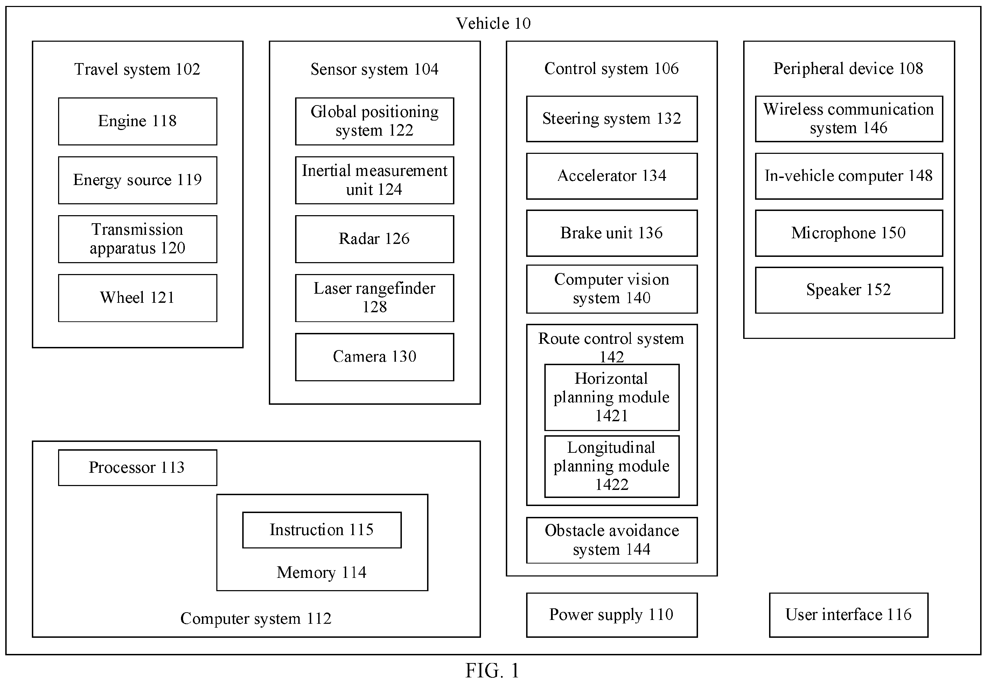

Embodiments of this application may be applied to a scenario in which a seat of a vehicle needs to be automatically adjusted. For ease of understanding of this solution, a structure of a vehicle is first described in embodiments of this application with reference to FIG. 1. Refer to FIG. 1. FIG. 1 is a diagram of a structure of a vehicle according to an embodiment of this application. The vehicle 10 is configured to be in a fully or partially autonomous driving mode. For example, the vehicle 10 may control the vehicle in the autonomous driving mode. In addition, the vehicle may determine, based on a manual operation, a current status of the vehicle and a surrounding environment of the vehicle, possible behavior of at least one other vehicle in the surrounding environment, and a confidence level corresponding to a possibility that another vehicle performs the possible behavior, and control the vehicle 10 based on the determined information. When the vehicle 10 is in the autonomous driving mode, the vehicle 10 may alternatively be configured to operate without interacting with a person.

The vehicle 10 may include various subsystems, for example, a travel system 102, a sensor system 104, a control system 106, one or more peripheral devices 108, a power supply 110, a computer system 112, and a user interface 116. Optionally, the vehicle 10 may include more or fewer subsystems, and each subsystem may include a plurality of components. In addition, the subsystems and components of the vehicle 10 may be connected to each other in a wired or wireless manner.

The travel system 102 may include a component that provides power for the vehicle 10 to move. In an embodiment, the travel system 102 may include an engine 118, an energy source 119, a transmission apparatus 120, and wheels/tires 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, other oil-based fuels, propane, other compressed gas-based fuels, ethanol, solar panels, batteries, and other power sources. The energy source 119 may also provide energy for another system of the vehicle 10. The transmission apparatus 120 may transmit mechanical power from the engine 118 to the wheels 121. The transmission apparatus 120 may include a gearbox, a differential gear, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about the surrounding environment of the vehicle 10. For example, the sensor system 104 may include a positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an engine oil thermometer) of an internal system of the monitored vehicle 10. Sensor data from one or more of these sensors may be used to detect an object and corresponding features (a position, a shape, a direction, a speed, and the like) of the object. Such detection and recognition are key functions for a safe operation of the autonomous vehicle 10.

The positioning system 122 may be configured to estimate a geographical position of the vehicle 10. The IMU 124 is configured to sense a position and an orientation change of the vehicle 10 based on an inertial acceleration. In an embodiment, the IMU 124 may be a combination of an accelerometer and a gyroscope. The radar 126 may sense an object in the surrounding environment of the vehicle 10 by using a radio signal, and may be specifically represented as a millimeter-wave radar or a lidar. In some embodiments, in addition to sensing the object, the radar 126 can be further configured to sense a speed and/or an advancing direction of the object. The laser rangefinder 128 may sense, by using a laser, an object in an environment in which the vehicle 10 is located. In some embodiments, the laser rangefinder 128 may include one or more laser sources, a laser scanner, one or more detectors, and another system component. The camera 130 may be configured to capture a plurality of images of the surrounding environment of the vehicle 10. The camera 130 may be a static camera or a video camera.

The control system 106 controls operations of the vehicle 10 and components of the vehicle 10. The control system 106 may include various parts, including a steering system 132, an accelerator 134, a brake unit 136, a computer vision system 140, a route control system 142, and an obstacle avoidance system 144.

The steering system 132 may be operated to adjust an advancing direction of the vehicle 10. For example, in an embodiment, the steering system may be a steering wheel system. The accelerator 134 is configured to control an operating speed of the engine 118 and further control a speed of the vehicle 10. The brake unit 136 is configured to control the vehicle 10 to decelerate. The brake unit 136 may use friction to slow down the wheels 121. In another embodiment, the brake unit 136 may convert kinetic energy of the wheels 121 into a current. Alternatively, the brake unit 136 may reduce a rotational speed of the wheels 121 in another form to control the speed of the vehicle 10. The computer vision system 140 may be operated to process and analyze an image captured by the camera 130, to recognize an object and/or a feature in the surrounding environment of the vehicle 10. The object and/or the feature may include a traffic signal, a road boundary, and an obstacle. The computer vision system 140 may use an object recognition algorithm, a structure from motion (Structure from Motion, SFM) algorithm, video tracking, and other computer vision technologies. In some embodiments, the computer vision system 140 may be configured to draw a map for an environment, track an object, estimate a speed of the object, and the like. The route control system 142 is configured to determine a traveling route and a traveling speed of the vehicle 10. In some embodiments, the route control system 142 may include a horizontal planning module 1421 and a longitudinal planning module 1422. The horizontal planning module 1421 and the longitudinal planning module 1422 are separately configured to determine the traveling route and the traveling speed of the vehicle 10 based on data from the obstacle avoidance system 144, the GPS 122, and one or more predetermined maps. The obstacle avoidance system 144 is configured to recognize, evaluate, and avoid or bypass obstacles in the environment around the vehicle 10 in another manner. The obstacles may be specifically represented as an actual obstacle and a virtual moving object that may collide with the vehicle 10. In an example, the control system 106 may additionally or alternatively include a component other than the components shown and described. Alternatively, some of the foregoing components may be reduced.

The vehicle 10 interacts with an external sensor, another vehicle, another computer system, or a user by using the peripheral device 108. The peripheral device 108 may include a wireless communication system 146, an in-vehicle computer 148, a microphone 150, and/or a speaker 152. In some embodiments, the peripheral device 108 provides a means for a user of the vehicle 10 to interact with the user interface 116. For example, the in-vehicle computer 148 may provide information for the user of the vehicle 10. The user interface 116 may further operate the in-vehicle computer 148 to receive an input from the user. The in-vehicle computer 148 may perform an operation through a touchscreen. In another case, the peripheral device 108 may provide a means for the vehicle 10 to communicate with another device located in the vehicle. For example, the microphone 150 may receive audio (for example, a voice command or another audio input) from the user of the vehicle 10. Similarly, the speaker 152 may output audio to the user of the vehicle 10. The wireless communication system 146 may wirelessly communicate with one or more devices directly or through a communication network. For example, the wireless communication system 146 may use 3G cellular communication such as CDMA, EVD0, or GSM/GPRS, 4G cellular communication such as LTE, or 5G cellular communication. The wireless communication system 146 may perform communication by using a wireless local area network (wireless local area network, WLAN). In some embodiments, the wireless communication system 146 may directly communicate with a device by using an infrared link, Bluetooth, or ZigBee. Other wireless protocols such as various vehicle communication systems may be used. For example, the wireless communication system 146 may include one or more dedicated short-range communication (dedicated short-range communication, DSRC) devices. These devices may include public and/or private data communication between vehicles and/or roadside stations.

The power supply 110 may supply power to various components of the vehicle 10. In an embodiment, the power supply 110 may be a rechargeable lithium-ion or lead-acid battery. One or more battery packs of such a battery may be configured as a power supply to supply power to various components of the vehicle 10. In some embodiments, the power supply 110 and the energy source 119 may be implemented together, for example, in some pure electric vehicles.

Some or all of functions of the vehicle 10 are controlled by the computer system 112. The computer system 112 may include at least one processor 113. The processor 113 executes instructions 115 stored in a non-transitory computer-readable medium such as a memory 114. The computer system 112 may alternatively be a plurality of computing devices that control an individual component or a subsystem of the vehicle 10 in a distributed manner. The processor 113 may be any conventional processor, such as a commercially available central processing unit (central processing unit, CPU). Optionally, the processor 113 may be a dedicated device such as an application-specific integrated circuit (application-specific integrated circuit, ASIC) or another hardware-based processor. Although FIG. 1 functionally illustrates the processor, the memory, and another component of the computer system 112 in a same block, a person of ordinary skill in the art should understand that the processor or the memory may actually include a plurality of processors or memories that are not stored in a same physical housing. For example, the memory 114 may be a hard disk drive or another storage medium located in a housing different from that of the computer system 112. Therefore, a reference to the processor 113 or the memory 114 is understood as a reference to a set of processors or memories that may or may not operate concurrently. Different from using a single processor to perform the steps described herein, some components such as a steering component and a deceleration component may have respective processors. The processor performs only computation related to a component-specific function.

In various aspects described herein, the processor 113 may be located far away from the vehicle 10 and wirelessly communicate with the vehicle 10. In another aspect, some of the processes described herein are performed on the processor 113 disposed inside the vehicle 10, while others are performed by a remote processor 113, including performing a step necessary for single manipulation.

In some embodiments, the memory 114 may include instructions 115 (for example, program logic), and the instructions 115 may be executed by the processor 113 to perform various functions of the vehicle 10, including the functions described above. The memory 114 may also include additional instructions, including instructions to send data to, receive data from, interact with, and/or control one or more of the travel system 102, the sensor system 104, the control system 106, and the peripheral device 108. In addition to the instructions 115, the memory 114 may further store data, for example, road map and path information; a position, a direction, a velocity, and other vehicle data of the vehicle; and other information. Such information may be used by the vehicle 10 and the computer system 112 when the vehicle 10 operates in an autonomous mode, a semi-autonomous mode, and/or a manual mode. The user interface 116 is configured to provide information for or receive information from the user of the vehicle 10. Optionally, the user interface 116 may include one or more input/output devices in a set of peripheral devices 108, for example, the wireless communication system 146, the in-vehicle computer 148, the microphone 150, and the speaker 152.

The computer system 112 may control a function of the vehicle 10 based on inputs received from various subsystems (for example, the travel system 102, the sensor system 104, and the control system 106) and the user interface 116. For example, the computer system 112 may control the steering system 132 by using an input from the control system 106, to avoid an obstacle detected by the sensor system 104 and the obstacle avoidance system 144. In some embodiments, the computer system 112 may be operated to provide control over the vehicle 10 and the subsystems of the vehicle 10 in many aspects.

Optionally, one or more of the foregoing components may be installed separately from or associated with the vehicle 10. For example, the memory 114 may be partially or completely separated from the vehicle 10. The foregoing components may be communicatively coupled together in a wired and/or wireless manner.

Optionally, the foregoing components are merely examples. In actual application, components in the foregoing modules may be added or removed according to an actual requirement. FIG. 1 should not be construed as a limitation on embodiments of this application. An autonomous driving vehicle traveling on a road, for example, the foregoing vehicle 10, may recognize an object in a surrounding environment of the vehicle to determine an adjustment to a current speed. The object may be another vehicle, a traffic control device, or an object of another type. In some examples, each recognized object may be considered independently, and a speed to which the autonomous driving vehicle is to be adjusted may be determined based on a respective feature of the object, such as a current speed and an acceleration of the object, and a spacing between the object and the vehicle.

Optionally, the vehicle 10 or a computing device (such as the computer system 112, the computer vision system 140, or the memory 114 in FIG. 1) associated with the vehicle 10 may predict behavior of the recognized object based on the feature of the recognized object and a status (for example, traffic, rain, or ice on a road) of the surrounding environment. Optionally, each recognized object depends on behavior of another recognized object, and therefore all recognized objects may be further considered together to predict behavior of a single recognized object. The vehicle 10 can adjust the speed of the vehicle based on the predicted behavior of the recognized object. In other words, the vehicle 10 can determine, based on the predicted behavior of the object, a stable state to which the vehicle needs to be adjusted (for example, accelerated, decelerated, or stopped). In this process, another factor may alternatively be considered to determine the speed of the vehicle 10, for example, a horizontal position of the vehicle 10 on the road on which the vehicle travels, curvature of the road, and proximity of a static object and a dynamic object. In addition to providing an instruction to adjust the speed of the autonomous driving vehicle, the computing device may further provide an instruction to modify a steering angle of the vehicle 10, so that the vehicle 10 follows a given trajectory and/or keeps safe horizontal and longitudinal distances from an object near the vehicle 10 (for example, a car in an adjacent lane of the road).

The vehicle 10 may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in embodiments of this application.

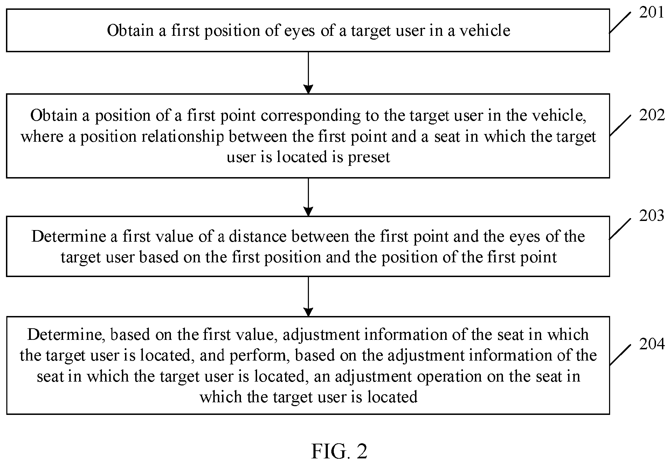

With reference to the foregoing descriptions, an embodiment of this application provides a method for adjusting a seat in a vehicle, and the method may be applied to the vehicle 10 shown in FIG. 1. Refer to FIG. 2. FIG. 2 is a schematic flowchart of a method for adjusting a seat in a vehicle according to an embodiment of this application. FIG. 2 shows the following steps. 201: When an adjustment operation needs to be automatically performed on a seat in which a user (which is referred to as a "target user" below for ease of description) in a vehicle is located, a first position of eyes of the target user in the vehicle may be obtained. 202: When the adjustment operation needs to be automatically performed on the seat in which the target user in the vehicle is located, the vehicle further needs to obtain a position of a first point corresponding to the target user in the vehicle, where a position relationship between the first point and the seat in which the target user is located is preset. 203: The vehicle determines a first value of a distance between the first point and the eyes of the target user based on the first position and the position of the first point. 204: The vehicle determines, based on the first value, adjustment information of the seat in which the target user is located, and performs, based on the adjustment information of the seat in which the target user is located, the adjustment operation on the seat in which the target user is located.

In this embodiment of this application, a solution for automatically adjusting a seat in a vehicle is provided. Because the position relationship between the first point and the seat in which the user is located is preset, the distance between the first point and the eyes of the user can represent size information of a body of the user. The adjustment information of the seat is determined based on the distance between the first point in the vehicle and the eyes of the user. This helps improve a degree of matching between an adjusted seat and a body size of the user.

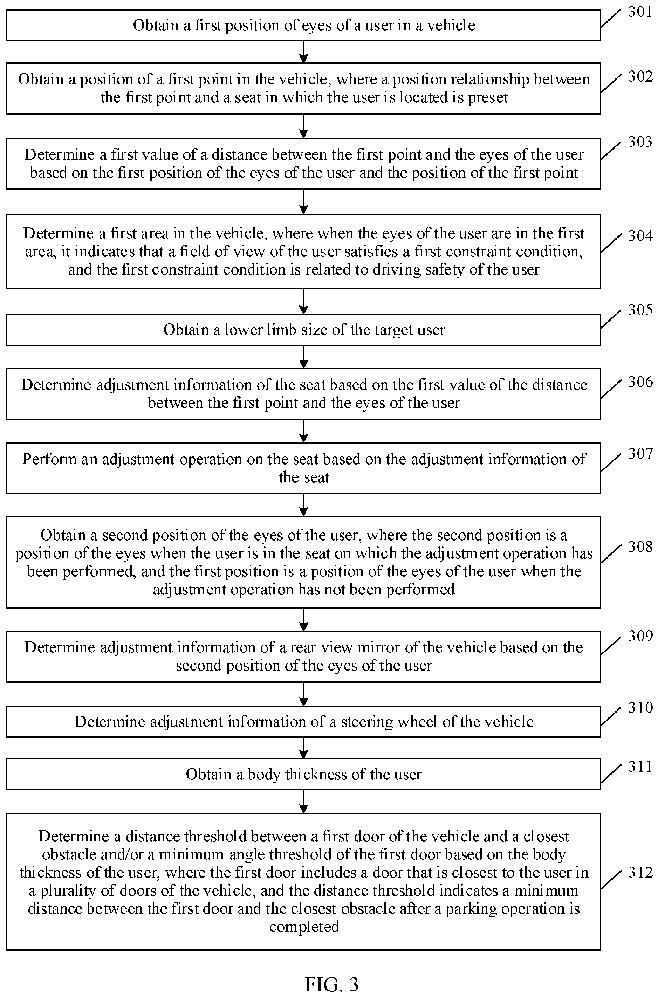

Specifically, refer to FIG. 3. FIG. 3 is another schematic flowchart of a method for adjusting a seat in a vehicle according to an embodiment of this application. The method for adjusting a seat in a vehicle provided in this embodiment of this application may include the following steps.

301: Obtain a first position of eyes of a user in a vehicle.

In this embodiment of this application, to obtain a position of eyes of at least one user in the vehicle, one or more sensors may be deployed in the vehicle. A field of view (field of view, FOV) of the one or more sensors needs to cover a head of the at least one user in the vehicle. In this case, the vehicle may obtain facial image information of a target user (that is, any one of the at least one user) by using the deployed sensor, and then obtain a first position of eyes of the target user based on the facial image information of the target user.

The at least one user in the vehicle may include a user (that is, a driver) located in a driver seat, and may include a user in another position in the vehicle, for example, in a front passenger seat or a position behind the driver. This may be specifically set flexibly with reference to an actual product form, and is not limited herein.

The sensor may be specifically represented as a camera, a radar, another sensor that can collect position information of the eyes of the user in the vehicle, or the like. For example, the camera may be an infrared camera or a camera of another type.

For example, an installation position of any sensor may be any one of the following positions: an A-pillar (A-pillar) of the vehicle, a steering wheel of the vehicle, an upper side of a fastening rod of the steering wheel, a rear view mirror in the vehicle, a back of a driver seat in the vehicle, a back of a front passenger seat in the vehicle, another position in the vehicle, or the like. The A-pillar of the vehicle means two pillars respectively located in the front left and the front right, and the two A-pillars connect the top of the vehicle and a front compartment of the vehicle. It should be noted that the installation position of the sensor may be flexibly set according to an actual application product. The example herein is merely used for ease of understanding of this solution, and is not intended to limit this solution.

The first position of the eyes of the user may be represented as coordinate information of the eyes of the user in a first coordinate system. Optionally, the first coordinate system may be a three-dimensional coordinate system. For example, the first coordinate system may be a coordinate system established by using a sensor collecting image information of the target user as an origin, or may be a coordinate system established by using a center of the vehicle as an origin, or may be a coordinate system established by using a center of a seat in which the target user is located as an origin, or may be a coordinate system established by using a center of the rear view mirror in the vehicle as an origin. The first coordinate system may be a two-dimensional coordinate system, a three-dimensional coordinate system, a coordinate system of another type, or the like. Specifically, a specific first coordinate system to be used may be determined with reference to an actual application scenario. This is not limited herein.

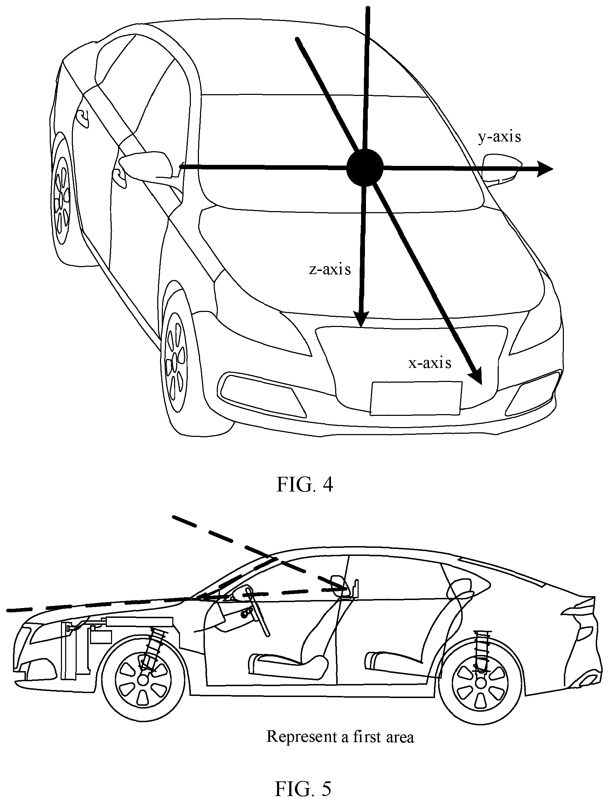

For example, the first coordinate system may be a three-dimensional coordinate system. The three-dimensional coordinate system may include a first direction, a second direction, and a third direction, and the first direction, the second direction, and the third direction are all perpendicular to each other. For example, the first direction may be a longitudinal direction of the vehicle, and the longitudinal direction of the vehicle may also be understood as an advancing direction of the vehicle. The second direction may be a horizontal direction of the vehicle. In a top view of the vehicle, the longitudinal direction of the vehicle is perpendicular to the horizontal direction of the vehicle. The third direction may be perpendicular to a vehicle body floor of the vehicle. For more intuitive understanding of this solution, refer to FIG. 4. FIG. 4 is a diagram of a first coordinate system according to an embodiment of this application. As shown in FIG. 4, a direction of an x-axis may represent the first direction, a direction of a y-axis may represent the second direction, and a direction of a z-axis may represent the third direction. It should be understood that an example in FIG. 4 is merely for ease of understanding of this solution, and is not intended to limit this solution.

Optionally, a driver monitoring system (driver monitoring system, DMS) is deployed in the vehicle. When a first position of eyes of a driver in the vehicle (that is, a user located in the driver seat in the vehicle) needs to be obtained, the first position of the eyes of the driver may be collected by using a sensor in the DMS. Further, optionally, the vehicle may collect coordinate information of the eyes of the driver in the three-dimensional coordinate system by using the sensor in the DMS.

Optionally, before step 301 is performed, the vehicle may further output prompt information, where the prompt information is used to prompt the target user to stick the back of the target user close to a backrest of the seat and sit straight when the target user sits in the seat. After the prompt information is output to the user, step 301 is performed. The prompt information may be a voice prompt, for example, "Stick your back to the backrest of the seat" is played in a voice form. The prompt information may alternatively include text and image information. For example, an image of a standard sitting posture of the user in the seat is displayed on a central control screen of the vehicle, and text information "Stick your back to the backrest of the seat" is output. Specific representation forms of the prompt information are not exhausted herein.

Optionally, before performing step 301, the vehicle may further automatically adjust the seat of the target user to a first preset position. The first preset position may also be referred to as a greeting position of the seat.

Optionally, after obtaining the image information of the target user by using the sensor, the vehicle may further obtain a gender and an age of the target user. For example, a first machine learning model may be configured on the vehicle. The vehicle inputs the image information of the target user into the first machine learning model, to obtain a predicted gender and a predicted age of the target user that are output by the first machine learning model. The first machine learning model is a model on which a training operation has been performed. The "machine learning model" in this application may be represented as a neural network model or a non-neural network model. It should be noted that the vehicle may alternatively obtain the gender and the age of the target user in another manner. The example herein is merely used to prove implementability of this solution, and is not intended to limit this solution.

302: Obtain a position of a first point in the vehicle, where a position relationship between the first point and a seat in which the user is located is preset.

In this embodiment of this application, to perform an adjustment operation on the seat of the target user (that is, any one of the at least one user in the vehicle), the vehicle may further obtain the position of the first point corresponding to the target user in the vehicle. The position relationship between the first point and the seat in which the target user is located is preset, that is, the position of the first point corresponding to the target user is determined based on a position of the seat in which the target user is located. For example, the position of the first point may be represented as coordinate information of the first point in a second coordinate system. A meaning of the "second coordinate system" is similar to a meaning of the "first coordinate system". For details, refer to the description in step 301. It should be noted that the second coordinate system and the first coordinate system may be a same coordinate system, or may be different coordinate systems. This is not limited herein.

Optionally, the position of the first point is calculated based on a movement parameter of the seat. The movement parameter of the seat includes a movement parameter of a current position of the seat relative to a second preset position of the seat. The second preset position of the seat and the first preset position of the seat may be the same or different. Specifically, the vehicle may obtain the movement parameter of the seat in which the target user is located, and determine the coordinate information of the first point in the vehicle in the second coordinate system based on the movement parameter. For example, the movement parameter may indicate a movement parameter of the current position of the seat in which the target user is located relative to an initial position (that is, an example of the second preset position) of the seat; or the movement parameter may indicate a movement parameter of the current position of the seat relative to another position of the seat. For example, the "another position of the seat" may be a frontmost and nethermost position of the seat. For another example, the "another position of the seat" may be a backmost and nethermost position of the seat. This is not limited herein.

The movement parameter may include a first movement parameter and/or a second movement parameter. The first movement parameter indicates a movement distance, in the longitudinal direction of the vehicle, of the seat in which the target user is located, and the second movement parameter indicates a movement distance, in a perpendicular direction of the vehicle body floor, of the seat in which the target user is located.

The first movement parameter may be represented as a value (for example, "P"). P represents that the seat moves P times in the longitudinal direction of the vehicle, so that the current position of the seat moves in the longitudinal direction of the vehicle by a length of P unit distances relative to the second preset position of the seat. In other words, the movement distance, in the longitudinal direction of the vehicle, of the seat in which the target user is located is P multiplied by a length of each unit distance. Lengths of unit distances of different vehicles may be the same or different. A value of P may be an integer greater than or equal to 0. For example, a movable distance of a seat 1 in a vehicle in a longitudinal direction of the vehicle is 30 centimeters, and the 30 centimeters are divided into 100 unit distances. In this case, one unit distance represents 0.3 centimeters. If a value of the first movement parameter is 10, it indicates that the seat in which the target user is located moves by 3 centimeters in the longitudinal direction of the vehicle. Alternatively, the first movement parameter may be represented as a movement distance. For example, the first movement parameter may include that the seat moves by 5 centimeters in the longitudinal direction of the vehicle.

For another example, a movable distance of a seat 1 in a vehicle in a longitudinal direction of the vehicle is 32 centimeters. The 32 centimeters are divided into 100 units from 1 to 100. Each unit distance in the 30 units from 1 to 30 represents 0.4 centimeters, each unit distance in the 40 units from 31 to 70 represents 0.2 centimeters, and each unit distance in the 30 units from 71 to 100 represents 0.4 centimeters. In other words, unit distances in different intervals may be different. If the first movement parameter is 10, it indicates that the seat in which the target user is located moves by 4 centimeters in the longitudinal direction of the vehicle. If the first movement parameter is 50, it indicates that the seat in which the target user is located moves by 16 centimeters in the longitudinal direction of the vehicle. It should be noted that the examples herein are merely for ease of understanding of this solution, and are not intended to limit this solution.

A meaning of the "second movement parameter" is similar to a meaning of the "first movement parameter", and a difference lies in that the first movement parameter is used to obtain a movement distance of the current position of the seat in which the target user is located relative to the second preset position of the seat in the longitudinal direction of the vehicle, and the second movement parameter is used to obtain a movement distance of the current position of the seat in which the target user is located relative to the second preset position of the seat in the perpendicular direction of the vehicle body floor. Details are not described herein again.

Optionally, the movement parameter may further include a first movement angle and/or a second movement angle. The first movement angle indicates a rotation angle of a backrest of the seat in which the target user is located relative to the initial position, and the second movement angle indicates a rotation angle of a cushion of the seat in which the target user is located relative to the initial position.

The first point may be a point at a preset position on the seat in which the target user is located, or the first point may be a point obtained by shifting a point at a preset position on the seat in which the target user is located. This is not limited herein.

Optionally, if the first point represents a position of a tailbone when the target user sits in the seat, a value of a distance between the first point and the eyes of the user that is determined in a subsequent step may represent an eye height of the target user in a sitting posture. **In** this embodiment of this application, if the first point represents the position of the tailbone when the target user sits in the seat, the value of the distance between the first point and the eyes of the user may represent the eye height of the target user in the sitting posture. This improves a degree of combination between this solution and an actual application, and helps reduce implementability of this solution. In addition, the position of the first point is calculated based on the movement parameter of the seat, thereby reducing difficulty in obtaining the position of the first point.

For example, the "position of the tailbone when the target user sits in the seat" may also be understood as a "connection point between a torso and a thigh of the target user", that is, a hip point (hip point) of the target user. For example, the first point may be an intermediate point of a folding line between the backrest and the cushion of the seat in which the target user is located. Alternatively, the first point may be a point obtained by shifting the intermediate point in the longitudinal direction of the vehicle and the perpendicular direction of the vehicle body floor. Because the target user may not be closely attached to the seat, the point obtained by shifting the intermediate point may be closer to a real position of a point H of the user. Alternatively, the first point may be a point obtained by shifting the intermediate point in the horizontal direction of the vehicle, or the like. The specific position of the first point may be flexibly determined with reference to an actual application scenario. This is not limited herein.

It should be noted that another point may alternatively be selected as the first point, for example, a center point of the backrest of the seat in which the target user is located, provided that size information of the target user can be obtained by calculating the distance between the first point and the eyes of the user. A specific setting may be flexibly determined with reference to an actual application scenario. This is not limited herein.

303: Determine a first value of a distance between the first point and the eyes of the user based on the first position of the eyes of the user and the position of the first point.

In this embodiment of this application, after obtaining the first position of the eyes of any one (which is referred to as a "target user" below for ease of description) of the at least one user and the position of the first point corresponding to the target user, the vehicle may determine the first value of the distance between the first point and the eyes of the user based on the first position of the eyes of the user and the position of the first point. Optionally, if the first point represents a position of a tailbone when the target user sits in the seat, the first value of the distance between the first point and the eyes of the user may represent an eye height of the user in a sitting posture.

Specifically, in one case, if the first coordinate system and the second coordinate system are a same coordinate system (for ease of description, both the "first coordinate system" and the "second coordinate system" may be referred to as a target coordinate system below), after obtaining coordinate information of the eyes of the target user in the first coordinate system and coordinate information of the first point in the second coordinate system, the vehicle may directly generate the first value of the distance between the first point and the eyes of the target user based on the coordinate information of the eyes of the target user in the first coordinate system and the coordinate information of the first point in the second coordinate system.

In another case, if the first coordinate system and the second coordinate system are different coordinate systems, the vehicle may convert coordinate information of the eyes of the target user and/or coordinate information of the first point, to obtain coordinate information of the eyes of the target user and coordinate information of the first point in a target coordinate system. The target coordinate system may be the first coordinate system, the second coordinate system, or another coordinate system other than the first coordinate system and the second coordinate system. This may be specifically determined flexibly with reference to an actual application scenario, and is not limited herein. The vehicle may generate the first value of the distance between the first point and the eyes of the target user based on the coordinate information of the eyes of the target user in the target coordinate system and the coordinate information of the first point in the target coordinate system.

The vehicle may perform "determining the first value of the distance between the first point and the eyes of the target user based on the first position of the eyes of the target user and the position of the first point" in a plurality of manners. In an implementation, after obtaining coordinate information of each eye of the target user in the target coordinate system and the coordinate information of the first point in the target coordinate system, the vehicle may generate a first value of a distance between the first point and a second straight line, that is, obtain the first value of the distance between the first point and the eyes of the target user, where both eyes of the target user are located on the second straight line.

In another implementation, after obtaining coordinate information of each eye of the target user in the target coordinate system, the vehicle may obtain coordinate information of an intermediate point of a target line segment in the target coordinate system, where two endpoints of the target line segment are two eyes of the target user. The vehicle generates a first value of a distance between the intermediate point of the target line segment and the first point, that is, obtains the first value of the distance between the first point and the eyes of the target user.

In another implementation, if the first point deviates relative to the intermediate point in the horizontal direction of the vehicle, the intermediate point is an intermediate point of a folding line between the backrest and the cushion of the seat in which the target user is located. If the first point deviates leftward relative to the intermediate point, the vehicle may generate a first value of a distance between the left eye of the target user and the first point based on coordinate information of the left eye of the target user in the target coordinate system and the coordinate information of the first point in the target coordinate system, that is, obtain the first value of the distance between the first point and the eyes of the target user. Alternatively, if the first point deviates rightward relative to the intermediate point, the vehicle may generate a first value of a distance between the right eye of the target user and the first point based on coordinate information of the right eye of the target user in the target coordinate system and the coordinate information of the first point in the target coordinate system, that is, obtain the first value of the distance between the first point and the eyes of the target user.

It should be noted that the vehicle may alternatively calculate the first value of the distance between the first point and the eyes of the user in another manner. The foregoing descriptions of the plurality of specific implementations of "determining the first value of the distance between the first point and the eyes of the target user based on the first position of the eyes of the target user and the position of the first point" are merely for ease of understanding of this solution, and are not intended to limit this solution.

304: Determine a first area in the vehicle, where when the eyes of the user are in the first area, it indicates that a field of view of the user satisfies a first constraint condition, and the first constraint condition is related to driving safety of the user.

In this embodiment of this application, step 304 is an optional step. When the target user (that is, any one of the at least one user) is a driver, to improve safety of the target user in a driving process, the vehicle may further determine the first area in the vehicle. When the eyes of the driver are in the first area, it indicates that a field of view of the driver satisfies the first constraint condition. The first constraint condition is related to driving safety of the user. For example, the "first area" may also be referred to as an "eye-zone (eye-zone)".

For example, the "first constraint condition related to driving safety" may include: An upper limit of the field of view of the driver (that is, an example of the target user in the vehicle) sitting in the seat may be that the driver can see at least the top of an object whose distance from the eyes of the driver is N meters and whose height is M meters, and a lower limit of the field of view of the driver sitting in the seat may include that the driver can see the ground whose distance from a vehicle head is greater than or equal to J meters. Values of N, M, and J are all positive numbers. Because both the upper limit of the field of view and the lower limit of the field of view of the driver are affected by a vehicle frame, after a size of the vehicle and the values of N, M, and J are determined, the first area in the vehicle can be determined. When the eyes of the driver are in the first area, the driver can see the top of the object whose distance from the eyes of the driver is N meters and whose height is M meters, and the driver can see the ground whose distance from the vehicle head is greater than or equal to J meters.

Optionally, in different road scenarios, N, M, and J may have different values. In other words, at least two first areas corresponding to at least two types of N, M, and J may be stored in the vehicle. For example, because a height of lane traffic lights in China is 5.5 meters to 7 meters, a value of M may be 7 meters. On an urban road, because a traveling speed of a vehicle is relatively low, values of N and J may be relatively small. On an express way, because a traveling speed of a vehicle is relatively high, values of N and J may be relatively large. Specifically, the values of N, M, and J may be flexibly set with reference to an actual application scenario. This is not limited herein.

The vehicle may "determine the first area in the vehicle" in a plurality of manners. When the driver sits in the seat in the vehicle, a line of sight range of the driver is affected by the vehicle frame. Therefore, after the size of the vehicle and the values of N, M, and J are determined, the first area in the vehicle can be determined. In an implementation, position information of at least one first area that is in a one-to-one correspondence with at least one group of values of N, M, and J may be pre-stored in the vehicle, and the at least one group of values of N, M, and J corresponds to at least one road environment. It should be noted that a mapping relationship between at least one group of values of N, M, and J and position information of at least one first area may be deployed in the vehicle, or a mapping relationship between at least one road environment and position information of at least one first area may be deployed in the vehicle.

In step 304, if only one first area is deployed in the vehicle, the vehicle may directly determine the first area based on stored data. If a plurality of first areas are deployed in the vehicle, in one case, the vehicle may obtain, from the at least one group of values of N, M, and J based on a current road environment, a group of values of N, M, and J corresponding to the current road environment, and obtain one first area corresponding to the group of values of N, M, and J. In another case, the vehicle may obtain, based on a current road environment, one first area corresponding to the current road environment.

In another implementation, the vehicle may generate position information of the first area in the vehicle after determining the size of the vehicle and a group of values of N, M, and J corresponding to a road environment in which the vehicle is currently located.

For example, the position information of the first area may include coordinate information of a vertex of the first area in the vehicle, or the position information of the first area may be position information of a boundary line of the first area in the vehicle, or the like. The vehicle may alternatively record the position information of the first area in another form. Details are not listed herein one by one.

For more intuitive understanding of this solution, refer to FIG. 5. FIG. 5 is a diagram of a first area according to an embodiment of this application. FIG. 5 shows the first area in a left view. As shown in FIG. 5, in the left view of the first area, an upper limit of the first area passes through an upper edge of a front window of the vehicle, and a lower limit of the first area passes through a lower edge of the front window of the vehicle. It should be noted that, although not shown in FIG. 5, an extension line of the upper limit of the first area outside the vehicle passes through the top of an object whose distance from the eyes of the driver is N meters and whose height is M meters, and an extension line of the lower limit of the first area outside the vehicle passes through the ground whose distance from the vehicle head is greater than or equal to J meters. It should be understood that the example in FIG. 5 is merely for ease of understanding of this solution, and is not intended to limit this solution.

305: Obtain a lower limb size of the target user.

In this embodiment of this application, step 305 is an optional step. To perform an adjustment operation on the seat in which the target user (that is, any one of the at least one user) is located, the vehicle may further obtain the lower limb size of the target user.

The lower limb size of the target user may include a thigh length of the target user and a calf length of the target user; or the lower limb size of the target user may include a thigh length of the target user and a knee height of the target user in a sitting posture; or the lower limb size of the user may include other types of information.

Optionally, the lower limb size of the target user may further include a foot length of the target user and the like. This may be specifically determined flexibly with reference to an actual application scenario, and is not limited herein.

The vehicle may "obtain the lower limb size of the target user" in a plurality of manners. **In** an implementation, a first mapping relationship is configured in the vehicle, the first mapping relationship indicates at least one lower limb size corresponding to each of a plurality of value parameters of a first distance, and the first distance indicates the distance between the first point and the eyes of the user. In this case, step 305 may include: The vehicle obtains, based on the first mapping relationship, a lower limb size corresponding to the first value obtained in step 303. For example, a value of any value parameter of the first distance is 868 millimeters.

Each value parameter of the first distance may be a specific value. For example, a value of any value parameter of the first distance may be 729 millimeters, 749 millimeters, 761 millimeters, or another value. Each value parameter of the first distance may alternatively be a value range. For example, a value of any distance parameter of the first distance may be greater than or equal to 729 millimeters and less than 749 millimeters, greater than or equal to 749 millimeters and less than 761 millimeters, or another value range. This is not limited herein.

The first mapping relationship may indicate one lower limb size corresponding to each value parameter of the first distance. Alternatively, the first mapping relationship may indicate a plurality of lower limb sizes corresponding to each value parameter of the first distance.

Optionally, the plurality of lower limb sizes may include lower limb sizes corresponding to each value parameter of the first distance in a plurality of age brackets; and/or the plurality of lower limb sizes may include lower limb sizes corresponding to each value parameter of the first distance in terms of different genders. For example, after a value parameter of the first distance is determined, corresponding lower limb sizes in three age brackets: 18 to 30 years of age, 31 to 50 years of age, and 51 years of age and above, may be separately obtained. It should be understood that the example herein is merely for ease of understanding of this solution, and is not intended to limit this solution.

Further, in one case, the first mapping relationship may include a first sub-mapping relationship and a second sub-mapping relationship, the first sub-mapping relationship includes a correspondence between each value parameter of the first distance and a height, and the second sub-mapping relationship includes a correspondence between a height and a lower limb size. In another case, the first mapping relationship may directly include a correspondence between each value parameter of the first distance and a lower limb size, and the like. A specific representation form of the first mapping relationship may be flexibly determined with reference to an actual application scenario. This is not limited herein.

Specifically, in one case, if the first mapping relationship indicates one lower limb size corresponding to each value parameter of the first distance, after obtaining the first value of the distance between the first point in the vehicle and the eyes of the target user, the vehicle may directly obtain the lower limb size of the target user from the first mapping relationship.

In another case, when the first mapping relationship indicates a plurality of lower limb sizes corresponding to each value parameter of the first distance, and the plurality of lower limb sizes may include lower limb sizes corresponding to each value parameter of the first distance in a plurality of age brackets, if the vehicle further obtains the gender and the age of the target user in step 301, the vehicle may obtain the lower limb size of the target user from the first mapping relationship based on the first value of the distance between the first point in the vehicle and the eyes of the target user and the gender and/or the age of the target user. If the vehicle does not obtain the gender and the age of the target user in step 301, the vehicle may obtain a plurality of lower limb sizes corresponding to the first value from the first mapping relationship, and perform a preset operation on the plurality of lower limb sizes to obtain the lower limb size of the target user. The preset operation may be averaging, taking a median, taking a maximum value, another operation, or the like, and the sizes are not exhausted.

In another implementation, the vehicle may alternatively collect the lower limb size of the target user by using a sensor in the vehicle. In another implementation, the vehicle may further input the first value of the distance between the first point in the vehicle and the eyes of the target user into a second machine learning model, to obtain a lower limb size of the target user that is output by the second machine learning model. The second machine learning model is a model on which a training operation has been performed.

Optionally, the vehicle may alternatively input the age and/or the gender of the target user into the second machine learning model, to obtain a lower limb size of the target user that is output by the second machine learning model. The vehicle may alternatively collect the lower limb size of the target user in another manner. The example herein is merely used to prove implementability of this solution, and is not intended to limit this solution.

306: Determine adjustment information of the seat based on the first value of the distance between the first point and the eyes of the user.

In this embodiment of this application, after obtaining the first value of the distance between the first point and the eyes of the target user (any one of the "at least one user"), the vehicle may determine, based on the first value of the distance between the first point and the eyes of the target user, the adjustment information of the seat in which the target user is located.

Optionally, the first point corresponding to the target user represents a position of a tailbone when the target user sits in the seat, and the first value represents an eye height of the target user in a sitting posture.

The adjustment information of the seat in which the target user is located may include a movement parameter of the seat in which the target user is located relative to the current position. The movement parameter may include a third movement parameter corresponding to the longitudinal direction of the vehicle and/or a fourth movement parameter corresponding to the perpendicular direction of the vehicle body floor. The third movement parameter indicates how the seat in which the target user is located moves in the longitudinal direction of the vehicle. The fourth movement parameter indicates how the seat in which the target user is located moves in the perpendicular direction of the vehicle body floor.

For example, the third movement parameter may be represented as a value (for example, "Q"). Q represents that the seat needs to move Q times in the longitudinal direction of the vehicle. A movement distance, in the longitudinal direction of the vehicle, of the seat in which the target user is located is a sum of Q unit distances corresponding to the Q times of movement, and a value of Q may be an integer greater than or equal to 0. For another example, the third movement parameter may be represented as a distance value by which the seat needs to move in the longitudinal direction of the vehicle. Specific representation forms of the third movement parameter are not exhausted herein.

For a meaning of the "fourth movement parameter", refer to the foregoing description of the "third movement parameter". A difference lies in that the third movement parameter is used to determine how to adjust, in the longitudinal direction of the vehicle, the seat in which the target user is located, and the fourth movement parameter is used to determine how to adjust, in the perpendicular direction of the vehicle body floor, the seat in which the target user is located. Details are not described herein again.

Optionally, the adjustment information of the seat in which the target user is located may further include a first angle and/or a second angle. The first angle represents an angle for adjusting the backrest of the seat in which the target user is located, and the second angle represents an angle for adjusting the cushion of the seat in which the target user is located.

The vehicle may "determine the adjustment information of the seat based on the first value of the distance between the first point and the eyes of the user" in a plurality of manners. In an implementation, because the position relationship between the first point and the seat in which the user is located is preset, the distance between the first point and the eyes of the user can represent size information of a body of the user. A second mapping relationship may be preconfigured on the vehicle, and the second mapping relationship indicates a group of adjustment information of the seat corresponding to each of a plurality of second value parameters of the first distance.

For a meaning of the first distance, refer to the foregoing distance. Details are not described herein. Specific representation forms of the "second value parameter" and the "value parameter" are similar. For details, refer to the description in step 305. Details are not described herein. The "second value parameter" and the "value parameter" may be the same or may be different. Specifically, a value of the "second value parameter" may be flexibly determined with reference to an actual application scenario, and details are not described herein. In step 306, the vehicle may determine, based on the first value of the distance between the first point and the eyes of the target user and the second mapping relationship, the adjustment information of the seat in which the target user is located.

In another implementation, a third machine learning model may be preconfigured on the vehicle, and the vehicle may further input the first value of the distance between the first point in the vehicle and the eyes of the target user into the third machine learning model, to obtain adjustment information that is output by the third machine learning model and that is of the seat in which the target user is located. The third machine learning model is a model on which a training operation has been performed. The vehicle may alternatively "determine the adjustment information of the seat based on the first value of the distance between the first point and the eyes of the user" in another manner. The example herein is merely used to prove implementability of this solution, and is not intended to limit this solution.

Step 304 and step 305 are both optional steps. If step 304 is performed and step 305 is not performed, step 306 may include: The vehicle determines, based on the first value and the first area, adjustment information of the seat in which the driver (that is, an example of the target user in the vehicle) is located. When the driver is located in a seat in which an adjustment operation has been performed, the eyes of the driver are in the first area.

Optionally, when the driver is located in the seat on which the adjustment operation has been performed, the eyes of the driver may be at a central position in the first area; or when the driver is located in the seat on which the adjustment operation has been performed, the eyes of the driver may be at another position in the first area. The example herein is not intended to limit this solution.

Specifically, when the driver (that is, an example of the target user in the vehicle) is located in the seat on which the adjustment operation has been performed, the eyes of the driver need to be at a position in the first area. The first value of the distance between the driver and the first point is known, and the position relationship between the first point corresponding to the driver and the seat in which the driver is located is preset. Therefore, in step 306, the vehicle may determine, based on the first area in the vehicle determined in step 304, an expected position of the eyes in the first area when the driver is located in an adjusted seat, and then generate, based on the first value of the distance between the first position of the eyes of the driver and the first point in the vehicle, adjustment information of the seat in which the driver is located. When the driver is located in the seat on which the adjustment operation has been performed, the eyes of the driver are at the expected position in the first area.

In this embodiment of this application, the first area in the vehicle may be further determined, and the adjustment information of the seat is determined based on the first area and the first value of the distance between the first point and the eyes of the driver. When the driver is located in the seat on which the adjustment operation has been performed, the eyes of the driver are in the first area. When the eyes of the driver are in the first area, it indicates that a field of view of the driver satisfies a driving safety constraint. That is, when the adjustment information of the seat in which the driver is located is determined, not only the size information of the body of the driver is considered, but also safety of the driver in the adjusted seat is considered. This helps improve safety in a driving process.

If step 305 is performed and step 304 is not performed, 306 may include: The vehicle determines, based on the first value of the distance between the first point in the vehicle and the eyes of the target user and the lower limb size corresponding to the first value, adjustment information of the seat in which the target user is located. When the target user is located in the seat on which the adjustment operation has been performed, a lower limb of the target user may satisfy a third constraint condition, and the third constraint condition is related to driving comfort of the lower limb of the target user. The "third constraint condition related to the driving comfort of the lower limb of the target user" includes that an angle of at least one joint of the lower limb of the target user satisfies a comfort requirement.

Optionally, when the target user is the driver, the "third constraint condition related to the driving comfort of the lower limb of the target user" may include any one or more of the following constraint conditions: When the target user is located in the seat on which the adjustment operation has been performed, and a foot of the target user is placed on an accelerator pedal in the vehicle, an included angle between a calf and an instep of the target user is within a first preset range, an included angle between the calf of the target user and a first straight line is within a second preset range, an included angle between the calf of the target user and a thigh of the target user is within a third preset range, or another angle that can reflect each joint of the lower limb of the target user, which are not exhausted herein. The first straight line is perpendicular to the vehicle body floor.

For example, a value of the first preset range may include 85 degrees to 100 degrees, a value of the third preset range may include 90 degrees to 135 degrees, and a value range of the second preset range may be obtained by adding an angle, relative to the horizontal direction, of the cushion of the seat in which the target user is located to the third preset range and subtracting 90 degrees. In this case, the value of the second preset range may be obtained based on the value of the third preset range and the angle, relative to the horizontal direction, of the cushion of the seat in which the target user is located. It should be noted that the example herein is merely for ease of understanding of this solution, and is not intended to limit this solution.

In this embodiment of this application, in a vehicle driving process, the foot of the driver is placed on the accelerator pedal for a long time. A position and a shape of the accelerator pedal in the vehicle are fixed. It is pre-specified that the included angle between the calf and the instep of the user is within the first preset range, and/or the included angle between the calf of the user and the first straight line is within the second preset range. The adjustment information of the seat in which the driver is located may be determined with reference to the first preset range and/or the second preset range. Therefore, in the vehicle driving process, the included angle between the calf and the instep of the driver can be within the first preset range, and/or the included angle between the calf of the user and the first straight line can be within the second preset range. This helps implement comfort of the calf of the driver in the driving process, and helps improve safety in the driving process when the driver is in a comfortable driving state.

Optionally, when the target user is located in the seat on which the adjustment operation has been performed, an upper body of the target user may further satisfy a driving comfort constraint. That "the upper body of the target user may satisfy the driving comfort constraint" includes that an angle of at least one joint of the upper body of the target user satisfies a comfort requirement.

For example, that "the upper body of the target user may satisfy the driving comfort constraint" may include any one or more of the following constraint conditions: An included angle between an upper arm and a forearm of the target user is within a fourth preset range, an included angle between the upper body of the target user and the first straight line is within a fifth preset range, an included angle between the upper body of the target user and the thigh of the target user is within a sixth preset range, an included angle between the forearm and a hand of the target user is within a seventh preset range, or another angle that can reflect each joint of the upper body of the target user. For example, a value of the fourth preset range may include 80 degrees to 160 degrees, a value of the fifth preset range may include 20 degrees to 30 degrees, a value of the sixth preset range may include 90 degrees to 120 degrees, a value of the seventh preset range may include 170 degrees to 180 degrees, and the like. The example herein is merely for ease of understanding of this solution, and is not intended to limit this solution.

For example, in an implementation, a third mapping relationship may be preconfigured on the vehicle, and the third mapping relationship indicates a group of adjustment information of the seat corresponding to each of a plurality of groups of parameter information used to describe the body size of the user. Each group of parameter information may include a value range of the first distance, a value range of a length of the thigh of the user, and a value range of a length of the calf of the user. In this case, in step 306, the vehicle may determine, from the third mapping relationship based on the first value of the distance between the first point and the eyes of the target user and the lower limb size of the target user, a group of adjustment information of the seat in which the target user is located.

In another implementation, a fourth machine learning model may be preconfigured on the vehicle. The vehicle may further input the first value and the lower limb size of the target user into the fourth machine learning model, to obtain adjustment information that is output by the fourth machine learning model and that is of the seat in which the target user is located. The fourth machine learning model is a model on which a training operation has been performed. The vehicle may alternatively "determine, based on the first value and the lower limb size corresponding to the first value, the adjustment information of the seat in which the target user is located" in another manner. The example herein is merely used to prove implementability of this solution, and is not intended to limit this solution.

In this embodiment of this application, not only the first value of the distance between the first point and the eyes of the target user is obtained, but also the lower limb size of the target user may be obtained, to determine, by combining the first value and the lower limb size of the target user, the adjustment information of the seat in which the target user is located. In other words, when the adjustment information of the seat in which the target user is located is determined, not only the size information of the upper body of the target user is considered, but also size information of the lower limb of the target user is considered. This helps further improve a degree of matching between an adjusted seat and the body size of the user. In addition, the first mapping relationship is deployed in the vehicle, and the lower limb size corresponding to the first value is obtained based on the first mapping relationship. This helps quickly obtain the lower limb size of the target user, thereby helping accelerate adjustment of the seat in which the target user is located.

If both step 304 and step 305 are performed, step 306 may include: The vehicle determines, based on the first area in the vehicle, the first value, and the lower limb size of the driver (that is, an example of the target user), adjustment information of the seat in which the driver is located. Optionally, when the driver is located in the seat in which the adjustment operation has been performed, the eyes of the driver is in the first area, and the lower limb of the driver satisfies a driving comfort constraint.

Specifically, the vehicle may determine, based on the first area in the vehicle and the first value, a first adjustment range of the seat in which the driver is located. When the seat in which the driver is located is adjusted based on the first adjustment range, both eyes of the driver are in the first area. The vehicle may further determine, based on the lower limb size of the driver, a second adjustment range of the seat in which the driver is located. When the seat in which the driver is located is adjusted based on the second adjustment range, lower limbs of the driver satisfy a driving comfort constraint. The vehicle may determine, based on an intersection set of the first adjustment range and the second adjustment range, the adjustment information of the seat in which the driver is located. After an adjustment operation is performed, based on the foregoing adjustment information, on the seat in which the driver is located, the seat may be at a central position in the intersection set of the first adjustment range and the second adjustment range, or the seat may be at a random position in the intersection set of the first adjustment range and the second adjustment range. This is not limited herein.

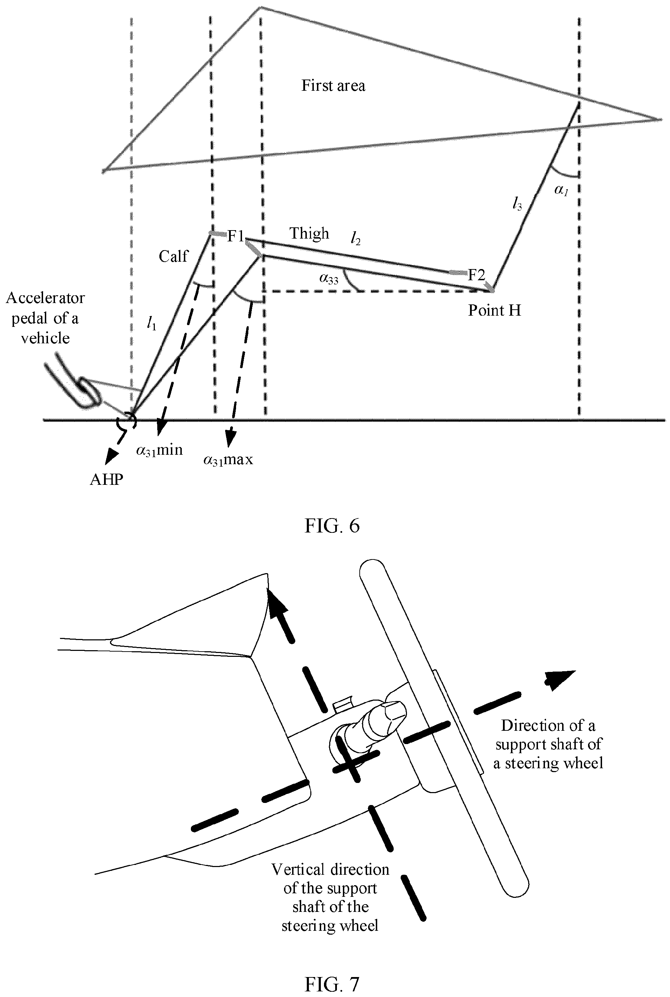

For more intuitive understanding of this solution, refer to FIG. 6. FIG. 6 is a diagram of determining adjustment information of a seat in which a driver is located according to an embodiment of this application. FIG. 6 shows a side view, where $l_1$ represents a length of a calf, $l_2$ represents a length of a thigh, $l_3$ represents a distance from eyes of a driver to a first point in a vehicle, $\alpha_1$ represents an included angle between a seat in which the driver is located and a first straight line, $\alpha_{31}$ represents an included angle between the calf and the first straight line, $\alpha_{31}$ min represents a position of the calf of the user when the included angle between the calf and the first straight line is a minimum angle while driving comfort is satisfied, and $\alpha_{31}$ max represents a position of the calf of the user when the included angle between the calf and the first straight line is a maximum angle while driving comfort is satisfied. The calf of the target user is connected to the thigh of the target user through a knee, and $\alpha_{33}$ represents an included angle between the thigh and a vehicle body floor, which is approximately equal to an included angle between a cushion and the vehicle body floor. In FIG. 6, an example in which $\alpha_1$ and $\alpha_{33}$ are both fixed and the first point represents a point H is used. F1 represents a comfort movement range of the knee of the user, and F2 represents a comfort movement range of the first point (that is, the point H).

The vehicle may determine a contact point between an accelerator pedal in the vehicle and the vehicle body floor as AHP. It is assumed that a contact point between a heel of the driver and the vehicle body floor is AHP. F1, that is, the comfort movement range of the knee of the user, is determined based on a value of $l_1$ and a value range of $\alpha_{31}$. Optionally, on the premise that $\alpha_1$ and $\alpha_{33}$ are both fixed, F1 is an arc, a distance between each point on the arc and AHP is $l_1$, and it can be ensured that a value of $\alpha_{31}$ falls within a second preset range. After F1 is determined, F2, that is, a movement range of the first point representing the point H of the user, may be determined according to $\alpha_{33}$ and $l_2$. Because $\alpha_{33}$ is fixed, F2 is also an arc. When the first point on the seat is located on the arc shown by F2, the calf of the driver satisfies a driving comfort requirement. For example, coordinate information of two endpoints of F2 in a vehicle body coordinate system (the coordinate system shown in FIG. 4 is used as an example) may be calculated by using the following formula:

$$x_{h1} = x_{AHP} + l_1 sin\alpha_{31}min + l_2 cos\alpha_{33}$$

$$z_{h1} = z_{AHP} + l_1 cos\alpha_{31}min - l_2 sin\alpha_{33}$$

$$x_{h2} = x_{AHP} + l_1 sin\alpha_{31}max + l_2 cos\alpha_{33}$$

$$z_{h2} = z_{AHP} + l_1 cos\alpha_{31}max - l_2 sin\alpha_{33}$$

$x_{h1}$ represents a coordinate of one endpoint of F2 in an x-axis direction, $z_{h1}$ represents a coordinate of one endpoint of F2 in a z-axis direction, $x_{h2}$ represents a coordinate of the other endpoint of F2 in the x-axis direction, $z_{h2}$ represents a coordinate of the other endpoint of F2 in the z-axis direction, $x_{AHP}$ represents a coordinate of the first point in the x-axis that is obtained in step 302, and $z_{AHP}$ represents a coordinate of the first point in the z-axis that is obtained in step 302. Meanings of other letters in the foregoing formula have been described, and details are not described herein again.

FIG. 6 further shows a first area. The vehicle may translate the entire first area to the lower front obliquely by $l_3$ based on an angle of $\alpha_1$ (that is, translate the first area by a length of an eye height of the user in a sitting posture), to obtain a mapping area of the first area on the seat.

The vehicle determines an intersection between the mapping area of the first area on the seat and F2, and determines, based on a current position of the first point and a position of the foregoing central point, adjustment information of the seat in which the driver is located. The central point of the intersection is used as a position of the first point on the seat on which the adjustment operation has been performed. It should be understood that the example in FIG. 6 is merely for ease of understanding of this solution, and is not intended to limit this solution.

307: Perform an adjustment operation on the seat based on the adjustment information of the seat.

In this embodiment of this application, after obtaining the adjustment information of the seat in which the target user (that is, any one of the at least one user) is located, the vehicle may perform the adjustment operation on the seat in which the target user is located. The performing an adjustment operation on the seat in which the target user is located may include any one or more of the following adjustment operations performed on the seat in which the target user is located: performing an adjustment operation on the seat in the longitudinal direction of the vehicle, performing an adjustment operation on the seat in the perpendicular direction of the vehicle body floor, performing an adjustment operation on an angle of the backrest of the seat, or performing an adjustment operation on an angle of the cushion of the seat.

The vehicle may perform the foregoing operation on each of the at least one user, to perform an adjustment operation on a seat in which each of the at least one user is located.

In this embodiment of this application, the adjustment information of the seat is determined based on the value parameter of the distance between the first point in the vehicle and the eyes of the user, and the adjustment operation is automatically performed on the seat based on the adjustment information of the seat. In other words, a solution for automatically adjusting a seat in a vehicle is provided. In addition, because the position relationship between the first point and the seat in which the user is located is preset, the distance between the first point and the eyes of the user can represent size information of a body of the user. The adjustment information of the seat is determined based on the distance between the first point in the vehicle and the eyes of the user. This helps improve a degree of matching between an adjusted seat and a body size of the user.

308: Obtain a second position of the eyes of the user, where the second position is a position of the eyes when the user is located in the seat on which the adjustment operation has been performed, and the first position is a position of the eyes of the user when the adjustment operation has not been performed.

In this embodiment of this application, step 308 is an optional step. When the target user (that is, any one of the at least one user) is the driver, after performing the adjustment operation on the seat in which the target user is located, the vehicle may further obtain the second position of the eyes of the target user. The second position of the eyes of the target user is a position of the eyes when the user is located in the seat on which the adjustment operation has been performed, and the first position of the eyes of the target user is a position of the eyes of the user when the adjustment operation has not been performed. Optionally, the second position of the eyes of the target user may be represented as coordinate information of the eyes in the first coordinate system when the user is located in the seat on which the adjustment operation has been performed.

In an implementation, a specific representation form of the "second position of the eyes of the target user" is similar to a specific representation form of the "first position of the eyes of the target user". For a meaning of the "second position of the eyes of the target user", refer to the foregoing description of the "first position of the eyes of the target user". For a specific implementation of step 308, refer to the description in step 301. Details are not described herein again.

In another implementation, assuming that a relative position between the target user and the seat remains unchanged, the adjustment information of the seat in which the target user is located may indicate how the eyes of the target user move. Alternatively, the vehicle may determine the second position of the eyes of the target user based on the first position of the eyes of the target user that is obtained in step 301 and the adjustment information of the seat in which the target user is located. In other words, the second position of the eyes of the target user may be calculated based on the first position of the eyes of the target user.

In another implementation, when the first point is a point on the seat in which the target user is located, if the target user does not change a sitting posture, the distance between the first point and the eyes of the target user remains unchanged. In this case, in step 303, the vehicle may further determine the second position of the eyes of the target user based on the first value of the distance between the first point and the eyes of the target user, and a current angle of the seat on which the adjustment operation has been performed. The vehicle may alternatively obtain the second position of the eyes of the target user in other manners, which are not exhausted herein.

309: Determine adjustment information of a rear view mirror of the vehicle based on the second position of the eyes of the user.

In this embodiment of this application, step 309 is an optional step. If step 308 and step 309 are not performed, step 311 may be directly performed after step 307 is performed. If steps 308 and 309 are performed, after obtaining the second position of the eyes of the target user, the vehicle determines the adjustment information of the rear view mirror of the vehicle based on the second position of the eyes of the target user, and performs an adjustment operation on the rear view mirror of the vehicle based on the adjustment information of the rear view mirror of the vehicle.

The rear view mirror of the vehicle may include any one or more of the following rear view mirrors: a rear view mirror in the vehicle, a rear view mirror on a left side outside the vehicle, or a rear view mirror on a right side outside the vehicle.

The adjustment information of the rear view mirror of the vehicle may be represented as a rotation angle of the rear view mirror of the vehicle. The rotation angle may include a rotation angle in a horizontal direction and/or a rotation angle in a vertical direction. Alternatively, the adjustment information of the rear view mirror of the vehicle may be represented as a quantity of rotation times of the rear view mirror of the vehicle, and the quantity of rotation times may include a quantity of rotation times in a horizontal direction and/or a quantity of rotation times in a vertical direction. Alternatively, the adjustment information of the rear view mirror of the vehicle may be represented as a quantity of rotation levels of the rear view mirror of the vehicle, and the quantity of rotation levels may include a quantity of rotation levels in a horizontal direction and/or a quantity of rotation levels in a vertical direction.

Specifically, in an implementation, a fifth machine learning model may be deployed in the vehicle. The vehicle inputs the second position of the eyes of the user into the fifth machine learning model, to obtain adjustment information that is of the rear view mirror of the vehicle and that is output by the fifth machine learning model. The fifth machine learning model is a model on which a training operation has been performed. It should be noted that the vehicle may "determine the adjustment information of the rear view mirror of the vehicle based on the second position of the eyes of the user" in a plurality of manners. Examples in the foregoing implementations are merely used to prove implementability of this solution, and are not intended to limit this solution.

Optionally, in any one or more of the following scenarios: reversing, re-getting on the vehicle, starting after parking, or another driving scenario of the vehicle, the vehicle may be triggered to obtain a current position of the eyes of the user, and determine whether a current position of the rear view mirror of the vehicle matches the current position of the eyes of the user, that is, whether the current position of the rear view mirror of the vehicle satisfies a driving safety constraint on a premise of the current position of the eyes of the user. When a determining result is no, prompt information may be output, where the prompt information indicates the user to adjust at least one rear view mirror of the vehicle.

In this embodiment of this application, after the adjustment operation is performed on the seat of the driver, if the driver adjusts the rear view mirror, a safety risk in a driving process is likely to occur. In this solution, the adjustment information of the rear view mirror of the vehicle may be further determined based on the position of the eyes when the driver is located in the seat on which the adjustment operation has been performed, so that the rear view mirror of the vehicle can be automatically adjusted based on an actual position of the eyes of the driver in the vehicle, thereby helping improve safety in the driving process. In addition, the second position of the eyes of the user is calculated based on the first position of the eyes of the user. This reduces difficulty in obtaining the second position.

310: Determine adjustment information of a steering wheel of the vehicle.

In this embodiment of this application, step 310 is an optional step. If the target user is a user sitting in a driver seat, the vehicle may further determine the adjustment information of the steering wheel of the vehicle, and perform an adjustment operation on the steering wheel of the vehicle based on the adjustment information of the steering wheel of the vehicle.

Optionally, the adjustment operation performed on the steering wheel satisfies any one or more of the following constraint conditions: After the adjustment operation is performed on the steering wheel, a field of view of the driver (that is, the target user sitting in the driver seat) satisfies the first constraint condition, an upper limb of the driver satisfies the second constraint condition or another constraint condition, and the like, which are not exhausted herein. For example, the first constraint condition is related to driving safety of the target user, and the second constraint condition is related to driving comfort of the upper limb of the target user.

The adjustment information of the steering wheel may include a fifth movement parameter and/or a sixth movement parameter, the fifth movement parameter may include a movement parameter in a direction of a support shaft of the steering wheel, and the sixth movement parameter may include a movement parameter in a perpendicular direction of the support shaft of the steering wheel.

For example, the fifth movement parameter may be represented as a value (for example, "T"), T represents that the steering wheel needs to move T times in the support shaft direction, a movement distance of the steering wheel in the support shaft direction is a sum of T unit distances corresponding to the T times of movement, and T is an integer greater than or equal to 0. For another example, the fifth movement parameter may be represented as a distance value by which the steering wheel moves in the support shaft direction. Specific representation forms of the fifth movement parameter are not exhausted herein.

For a meaning of the "sixth movement parameter", refer to the foregoing description of the "fifth movement parameter". A difference lies in that the fifth movement parameter is used to determine how to adjust the steering wheel in the support shaft direction of the steering wheel, and the sixth movement parameter is used to determine how to adjust the steering wheel in the perpendicular direction of the support shaft direction. Details are not described herein again.

For more intuitive understanding of this solution, refer to FIG. 7. FIG. 7 is a diagram of a support shaft direction of a steering wheel according to an embodiment of this application. FIG. 7 is a diagram of the support shaft direction of the steering wheel and the perpendicular direction of the support shaft of the steering wheel. It should be understood that the example in FIG. 7 is merely for ease of understanding of this solution. The support shaft direction of the steering wheel may alternatively be a reverse direction of the direction shown in FIG. 7, and the perpendicular direction of the support shaft of the steering wheel may alternatively be a reverse direction of the direction shown in FIG. 7. In addition, a specific direction in which the steering wheel moves may be determined with reference to an actual application scenario. This is not limited herein.

For a meaning of the first constraint condition, refer to the description in step 304. Details are not described herein again. To ensure that the field of view of the driver (that is, the target user sitting in the driver seat) satisfies the first constraint condition after the adjustment operation is performed on the steering wheel, in one case, if the steering wheel on which the adjustment operation has been performed is located outside the first area in the vehicle, it may be determined that the field of view of the driver satisfies the first constraint condition after the adjustment operation is performed on the steering wheel. That is, the steering wheel on which the adjustment operation has been performed needs to be located outside the first area in the vehicle. For a concept of the first area, refer to the description in step 304. Details are not described herein again.

Optionally, a constraint condition related to driving safety of the driver (that is, the target user sitting in the driver seat) may further include a third constraint condition. The third constraint condition may include: When the driver is located in the adjusted seat, a line of sight of the driver viewing a dashboard is not blocked by the adjusted steering wheel. For example, when the driver is located in the adjusted seat, the driver can see the dashboard through a hollow part on the adjusted steering wheel.

In another case, the vehicle may determine the adjustment information of the steering wheel of the vehicle based on the second position of the eyes of the driver (that is, the target user sitting in the driver seat). The second position of the eyes of the driver is a position of the eyes when the driver is located in the seat on which the adjustment operation has been performed, and the first position of the eyes of the driver is a position of the eyes of the driver when the adjustment operation has not been performed.

For example, the vehicle may determine, based on the second position of the eyes of the driver, a position of the field of view of the driver in the vehicle. If the steering wheel on which the adjustment operation has been performed is outside the field of view of the driver, it may be determined that the field of view of the driver satisfies the first constraint condition after the adjustment operation is performed on the steering wheel. That is, the steering wheel on which the adjustment operation has been performed needs to be outside the field of view of the driver.

The second constraint condition is related to driving comfort of the upper limb of the target user. To ensure that the upper limb of the driver (that is, the target user sitting in the driver seat) satisfies the second constraint condition after the adjustment operation is performed on the steering wheel, a second distance between a shoulder point of the driver and an upper edge point of the steering wheel needs to be less than or equal to a length of an arm of the driver, and a difference between the length of the arm of the driver and the second distance needs to be less than or equal to a length threshold.

For example, the shoulder point of the driver is a connection point between the arm and the body of the driver, the length of the arm of the driver may be a sum of lengths of the upper arm and the forearm of the driver, and the upper edge point of the steering wheel may be a highest point on the steering wheel.

Specifically, the vehicle may determine a position of the shoulder point of the driver based on the second position of the eyes of the driver; determine a position track of the upper edge point of the steering wheel based on the position of the shoulder point of the driver and the length of the arm of the driver; and determine the adjustment information of the steering wheel based on the position track of the upper edge point of the steering wheel. When the upper edge point of the steering wheel is located in the foregoing position track, the upper limb of the driver satisfies the second constraint condition, that is, satisfies a driving comfort constraint.

The vehicle may obtain the length of the arm of the driver in a plurality of manners. In an implementation, the first mapping relationship may further indicate an upper limb size corresponding to each of the plurality of value parameters of the first distance. For example, the upper limb size of the driver may include the length of the upper arm and the length of the forearm, or the upper limb size of the driver may include the length of the arm, or the like. The size is not limited. The vehicle may obtain the upper limb size of the driver based on the first value obtained in step 303 and the first mapping relationship.

In another implementation, the vehicle may collect image information of the upper limb of the driver by using a sensor in the vehicle, and generate the length of the arm of the driver based on the image information of the upper limb of the driver. It should be noted that the vehicle may alternatively obtain the length of the arm of the driver in another manner. The example herein is merely for ease of understanding of this solution, and is not intended to limit this solution.

In this embodiment of this application, after the adjustment operation is performed on the seat of the driver, automatic adjustment of the steering wheel may be further triggered based on the position of the eyes when the driver is located in the seat on which the adjustment operation has been performed. This helps improve safety and/or comfort in the driving process.

311: Obtain a body thickness of the user.

In this embodiment of this application, step 311 is an optional step, and the vehicle may "obtain the body thickness of the target user (that is, any one of the at least one user in the vehicle)" in a plurality of manners. In an implementation, the vehicle may obtain the body thickness of the target user based on the first value of the distance between the first point and the eyes of the target user. In this embodiment of this application, the body thickness of the user is obtained based on the first value of the distance between the first point and the eyes of the user. Because the first value is obtained in advance, the body thickness of the user can be quickly obtained.

Optionally, the first mapping relationship deployed in the vehicle may further indicate at least one body thickness corresponding to each of the plurality of value parameters of the first distance, and the vehicle may obtain the body thickness of the target user based on the first value of the distance between the first point and the eyes of the target user and the first mapping relationship. Optionally, the vehicle may obtain the body thickness of the target user based on the first value, the age and the gender of the target user, and the first mapping relationship. For a specific implementation of the foregoing step, refer to the description of the manner of obtaining the "lower limb size of the target user" in step 305. A difference lies in that the "lower limb size of the target user" in step 305 is replaced with the "body thickness of the target user" in step 311. Details are not described herein again.

In another implementation, the vehicle may alternatively collect the body thickness of the target user by using a sensor in the vehicle. For example, the vehicle collects image information of the upper body of the target user by using a sensor in a DMS system, determines, based on the image information of the upper body of the target user, a distance value between a second point in the upper body of the target user and the backrest of the seat in which the target user is located, and determines the distance value as the body thickness of the target user.

The second point is a point that is in the upper body of the target user and that has a longest distance from the backrest. For example, the second point may be a point that is in the upper body of the target user and that has a largest value on the x-axis. It should be noted that the vehicle may alternatively obtain the body thickness of the target user in another manner. The example herein is merely for ease of understanding of this solution, and is not intended to limit this solution.

312: Determine a distance threshold between a first door of the vehicle and a closest obstacle and/or a minimum angle threshold of the first door based on the body thickness of the user, where the first door includes a door that is closest to the user in a plurality of doors of the vehicle, and the distance threshold indicates a minimum distance between the first door and the closest obstacle after a parking operation is completed.

In this embodiment of this application, step 312 is an optional step. After obtaining the body thickness of the target user (that is, any one of the at least one user in the vehicle), and before parking the vehicle, the vehicle may determine the distance threshold between the first door of the vehicle and the closest obstacle and/or the minimum angle threshold of the first door. The first door includes a door that is closest to the target user in the plurality of doors of the vehicle.

The vehicle may determine "the distance threshold between the first door of the vehicle and the closest obstacle" in a plurality of manners. In an implementation, the vehicle may directly add the body thickness of the target user to a preset value, to obtain the distance threshold between the first door and the closest obstacle. The preset value is greater than or equal to a thickness of the first door.

In another implementation, the vehicle may add the body thickness of the target user to a preset value, to obtain a minimum distance that may be required when the target user gets off the vehicle; determine the minimum angle threshold of the first door based on the minimum distance that may be required when the target user gets off the vehicle; and then determine the distance threshold between the first door and the closest obstacle based on the minimum angle threshold of the first door.

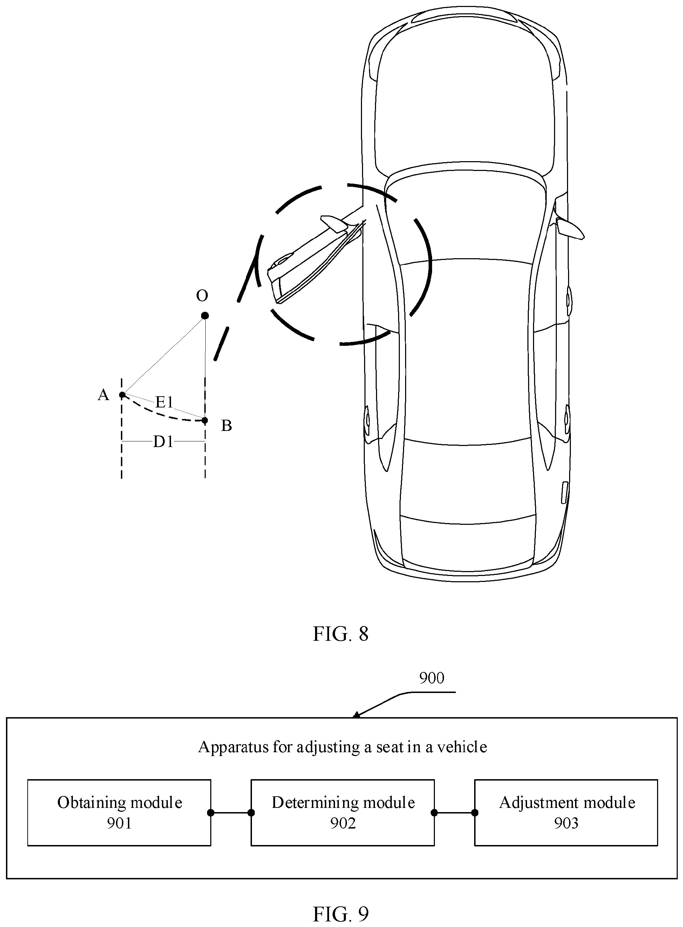

For more intuitive understanding of this solution, refer to FIG. 8. FIG. 8 is a diagram of a relationship between a body thickness of a driver and a driver's door according to an embodiment of this application. In FIG. 8, an example in which a top view of the vehicle is shown and the target user is the driver is used. When the driver opens the driver's door and gets off the vehicle, a movement path of the driver's door can form a sector, that is, a sector OAB including OA and OB in FIG. 8. When a chord length (that is, E1 in FIG. 8) of the sector OAB is greater than or equal to the minimum distance that may be required when the driver gets off the vehicle, it may be determined that the driver can pass through the driver's door, and the vehicle may determine a value of E1 based on the minimum distance that may be required when the driver gets off the vehicle, that is, determine a minimum opening angle of the driver's door (that is, an example of the first door). A distance threshold between the driver's door and a closest obstacle on the left side may be a length (that is, D1 in FIG. 8) of a line segment between perpendicular points after perpendicular lines are led through a point A and a point B to a horizontal line, that is, a distance between the point A and the point B in the horizontal direction of the vehicle. It should be understood that the example in FIG. 8 is merely for ease of understanding of this solution, and is not intended to limit this solution.

For a manner in which the vehicle generates the minimum angle threshold of the first door, refer to the foregoing description. Details are not described herein again.

Optionally, if steps 311 and 312 are not performed, in another implementation, the vehicle may record a historical opening angle of each of at least one door of the vehicle, and the at least one door includes a door closest to the driver. The vehicle may determine a minimum historical opening angle of each door as a minimum angle threshold of each door. Optionally, the vehicle may further determine a distance threshold between each door and a closest obstacle based on the minimum historical opening angle of the door. The distance threshold indicates a minimum distance between the door and the closest obstacle after the parking operation is completed.

Optionally, in an application scenario, if automatic parking is used by the vehicle, in an implementation, the vehicle may determine an automatic parking path based on the distance threshold between each of the at least one first door of the vehicle and the closest obstacle, to perform an automatic parking operation.

Specifically, the vehicle may first determine the automatic parking path, determine an actual distance between each first door of the vehicle and a closest obstacle after the automatic parking operation is completed based on the automatic parking path, and determine whether the actual distance between each first door and the closest obstacle is greater than or equal to a distance threshold between the first door and the closest obstacle. If a determining result is yes, the automatic parking operation may continue to be performed. If a determining result is no, the user in the vehicle may be prompted to get off the vehicle, and after the user in the vehicle gets off the vehicle, the automatic parking operation is performed based on the foregoing automatic parking path. Alternatively, the automatic parking path may be replanned, so that the actual distance between the first door and the closest obstacle is greater than or equal to the distance threshold between the first door and the closest obstacle. The vehicle may alternatively use another processing manner, which may be specifically set flexibly with reference to an actual application scenario.

In another implementation, the vehicle may determine an automatic parking path based on a minimum angle threshold of each of the at least one first door of the vehicle, to perform an automatic parking operation.

Specifically, the vehicle may first determine the automatic parking path, determine an actual opening angle of each first door of the vehicle after the automatic parking operation is completed based on the automatic parking path, and determine whether the actual opening angle of each first door is greater than or equal to the minimum angle threshold of the first door. If a determining result is yes, the automatic parking operation may continue to be performed. If a determining result is no, the user in the vehicle may be prompted to get off the vehicle, and after the user in the vehicle gets off the vehicle, the automatic parking operation is performed based on the foregoing automatic parking path. Alternatively, the automatic parking path may be replanned, so that an actual opening angle of each first door is greater than or equal to a minimum angle threshold of each first door. The vehicle may alternatively use another processing manner, which may be specifically set flexibly with reference to an actual application scenario.

Optionally, the vehicle may be configured with a get-off detection apparatus. If it can be determined that no user exists in the vehicle before automatic parking is performed on the vehicle, step 312 may not be triggered. In an implementation, the get-off detection apparatus may be represented as a gravity sensor configured under a seat, that is, a gravity sensor may be configured in at least one seat in the vehicle. When the at least one gravity sensor in the vehicle detects no weight information of a user, it may be determined that no user exists in the vehicle. If the at least one gravity sensor in the vehicle detects weight information of a user, a position at which the user still sits in the vehicle may be determined based on the gravity sensor that detects the weight information.

In another implementation, the get-off detection apparatus may be represented as an image sensor. The vehicle may determine, by using the image sensor in the vehicle, whether there is no user in the vehicle, or whether there is a user in the vehicle may alternatively be determined in other manners, which are not exhausted herein.

In another application scenario, if manual parking is used for the vehicle, after determining the distance threshold between each first door and the closest obstacle, the vehicle may further output indication information, where the indication information is used to notify the user of the distance threshold between each first door and the closest obstacle, to prompt the user that an actual distance between each first door and the closest obstacle needs to be greater than or equal to the distance threshold after a parking operation on the vehicle is completed.

For example, the vehicle may output the indication information in a form of a picture. For example, a warning line is displayed on the central control screen in a highlighted manner, and a distance between the warning line and the first door is the foregoing example threshold. For another example, the vehicle may output the prompt information in a voice playing manner or the like. A specific prompt manner may be flexibly set with reference to an actual application scenario. This is not limited herein.

In this embodiment of this application, when the vehicle is parked, the user on the vehicle may fail to open a door of the vehicle to get off although the vehicle is parked. In this solution, a body thickness of at least one user on the vehicle is obtained, and the distance threshold between the first door of the vehicle and the closest obstacle is determined based on the body thickness of the user. The first door includes a door that is closest to the user in the plurality of doors of the vehicle. In other words, space required when the user gets off the vehicle is estimated, to improve a probability that the user successfully gets off the vehicle, and improve user experience in this solution.

Based on the embodiments corresponding to FIG. 1 to FIG. 8, to better implement the foregoing solutions in embodiments of this application, the following further provides related devices configured to implement the foregoing solutions. Specifically, refer to FIG. 9. FIG. 9 is a diagram of a structure of an apparatus for adjusting a seat in a vehicle according to an embodiment of this application. The apparatus 900 for adjusting a seat in a vehicle may include an obtaining module 901, a determining module 902, and an adjustment module 903.

The obtaining module 901 is configured to obtain a first position of eyes of a user in a vehicle and a position of a first point in the vehicle, where a position relationship between the first point and a seat in which the user is located is preset; the determining module 902 is configured to determine a first value of a distance between the first point and the eyes of the user based on the first position and the position of the first point; the determining module 902 is further configured to determine adjustment information of the seat based on the first value; and the adjustment module 903 is configured to perform an adjustment operation on the seat based on the adjustment information of the seat.

Optionally, the first point represents a position of a tailbone when the user sits in the seat, the first value represents an eye height of the user in a sitting posture, the position of the first point is calculated based on a movement parameter of the seat, and the movement parameter of the seat includes a movement parameter of a current position of the seat relative to a preset position.

Optionally, a first mapping relationship is configured in the vehicle, the first mapping relationship indicates a lower limb size corresponding to each of a plurality of value parameters of a first distance, and the first distance indicates the distance between the first point and the eyes of the user.

The determining module 902 is specifically configured to: obtain, based on the first mapping relationship, a lower limb size corresponding to the first value; and determine the adjustment information of the seat based on the first value of the distance between the first point and the eyes of the user and the lower limb size corresponding to the first value.

Optionally, if the user is a driver, when the user is located in the seat on which the adjustment operation has been performed, and a foot of the user is placed on an accelerator pedal in the vehicle, an included angle between a calf and an instep of the user is within a first preset range, and/or an included angle between the calf of the user and a first straight line is within a second preset range, where the first straight line is perpendicular to a vehicle body floor of the vehicle.

Optionally, if the user is a driver, the determining module 902 is further configured to determine a first area in the vehicle, where when the eyes of the user are in the first area, it indicates that a field of view of the user satisfies a first constraint condition, and the first constraint condition is related to driving safety of the user.

The determining module 902 is specifically configured to determine the adjustment information of the seat based on the first value and the first area, where when the user is located in the seat on which the adjustment operation has been performed, the eyes of the user are in the first area.

Optionally, the obtaining module 901 is further configured to obtain a second position of the eyes of the user, where the second position is a position of the eyes when the user is located in the seat on which the adjustment operation has been performed, the first position is a position of the eyes of the user when the adjustment operation has not been performed, and the second position is calculated based on the first position.

The determining module 902 is further configured to determine adjustment information of a rear view mirror of the vehicle based on the second position of the eyes of the user.

Optionally, if the user is a driver, the determining module 902 is further configured to determine adjustment information of a steering wheel of the vehicle based on a second position of the eyes of the user, where the second position is a position of the eyes when the user is located in the seat on which the adjustment operation has been performed, and the first position is a position of the eyes of the user when the adjustment operation has not been performed.

The adjustment module 903 is further configured to perform an adjustment operation on the steering wheel of the vehicle based on the adjustment information of the steering wheel, where after the adjustment operation is performed on the steering wheel, a field of view of the user satisfies a first constraint condition, and/or an upper limb of the user satisfies a second constraint condition, where the first constraint condition is related to driving safety of the user, and the second constraint condition is related to driving comfort of the upper limb of the user.

Optionally, the obtaining module 901 is further configured to obtain a body thickness of the user.

The determining module 902 is further configured to determine a distance threshold between a first door of the vehicle and a closest obstacle and/or a minimum angle threshold of the first door of the vehicle based on the body thickness of the user, where the first door includes a door closest to the user in a plurality of doors of the vehicle, and the distance threshold indicates a minimum distance between the first door and the closest obstacle after the parking operation is completed.

Optionally, the obtaining module 901 is specifically configured to obtain the body thickness of the user based on the first value.

It should be noted that content such as information exchange and an execution process between modules/units in the apparatus 900 for adjusting a seat in a vehicle is based on a same concept as the method embodiments corresponding to FIG. 2 to FIG. 9 in this application. For specific content, refer to the descriptions in the foregoing method embodiments of this application. Details are not described herein again.

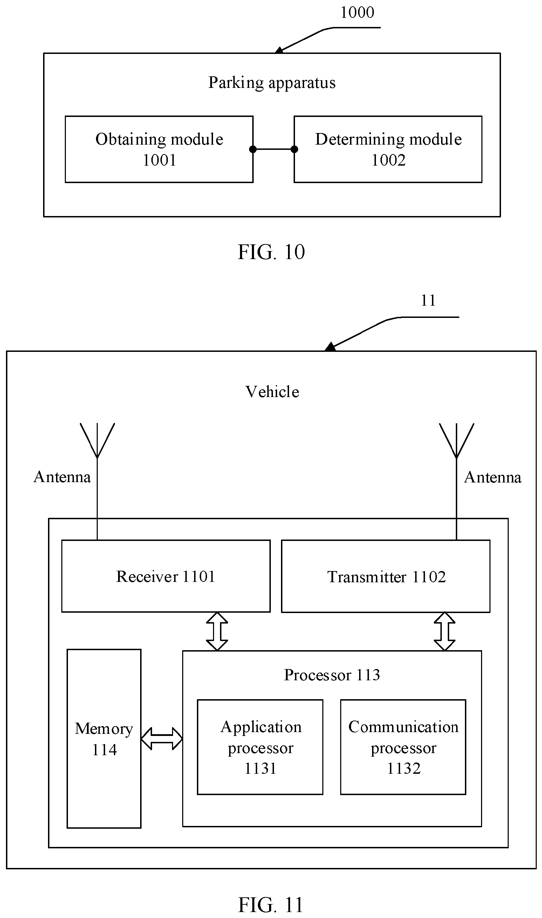

Refer to FIG. 10. FIG. 10 is a diagram of a structure of a parking apparatus according to an embodiment of this application. The parking apparatus 1000 may include an obtaining module 1001 and a determining module 1002.

The obtaining module 1001 is configured to obtain a body thickness of a user in a vehicle; and the determining module 1002 is configured to determine a distance threshold between a first door of the vehicle and a closest obstacle based on the body thickness of the user, where the first door includes a door closest to the user in a plurality of doors of the vehicle, and the distance threshold indicates a minimum distance between the first door and the closest obstacle after a parking operation is completed.

Optionally, the obtaining module 1001 is further configured to obtain a first position of eyes of the user in the vehicle and a position of a first point in the vehicle, where a position relationship between the first point and a seat in which the user is located is preset.

The determining module 1002 is further configured to determine a first value of a distance between the first point and the eyes of the user based on the first position and the position of the first point.

The determining module 1002 is further configured to determine adjustment information of the seat based on the first value.

The parking apparatus 1000 further includes an adjustment module, configured to perform an adjustment operation on the seat based on the adjustment information of the seat.

It should be noted that content such as information exchange and an execution process between modules/units in the parking apparatus 1000 is based on a same concept as the method embodiments corresponding to FIG. 2 to FIG. 8 in this application. For specific content, refer to the descriptions in the foregoing method embodiments of this application. Details are not described herein again.

An embodiment of this application further provides a vehicle. With reference to the foregoing descriptions of FIG. 1, refer to FIG. 11. FIG. 11 is a diagram of another structure of a vehicle according to an embodiment of this application. In some embodiments, the vehicle 11 may further include a communication function. Therefore, in addition to the components shown in FIG. 1, the vehicle 11 may further include a receiver 1101 and a transmitter 1102. The processor 113 may include an application processor 1131 and a communication processor 1132. In some embodiments of this application, the receiver 1101, the transmitter 1102, the processor 113, and the memory 114 may be connected through a bus or in another manner.

The processor 113 controls an operation of the autonomous driving vehicle. In specific application, components of the vehicle 11 are coupled together through a bus system. In addition to a data bus, the bus system may further include a power bus, a control bus, a status signal bus, and the like. However, for clear description, various buses are referred to as the bus system in the figure.

The receiver 1101 may be configured to: receive input digit or character information, and generate a signal input related to a related setting and function control of the autonomous driving vehicle. The transmitter 1102 may be configured to output digit or character information through a first interface. The transmitter 1102 may be further configured to send instructions to a disk group through the first interface, to modify data in the disk group. The transmitter 1102 may further include a display device like a display.

In this embodiment of this application, the application processor 1131 in the processor 113 is configured to perform the methods performed by the vehicle in the embodiments corresponding to FIG. 2 to FIG. 8. Specifically, the application processor 1131 in the processor 113 is configured to perform the following steps:

obtaining a first position of eyes of a user in a vehicle and a position of a first point in the vehicle, where a position relationship between the first point and a seat in which the user is located is preset;
determining a first value of a distance between the first point and the eyes of the user based on the first position and the position of the first point; and
determining adjustment information of the seat based on the first value, and performing an adjustment operation on the seat based on the adjustment information of the seat.

It should be noted that, for a specific implementation in which the application processor 1131 performs the methods performed by the vehicle in the embodiments corresponding to FIG. 2 to FIG. 8 and brought beneficial effects, refer to the descriptions in the method embodiments corresponding to FIG. 2 to FIG. 8. Details are not described one by one herein again.

An embodiment of this application further provides a computer-readable storage medium. The computer-readable storage medium stores a program used to generate a vehicle travel speed. When the program is run on a computer, the computer is enabled to perform the steps performed by the vehicle in the methods described in the embodiments shown in FIG. 2 to FIG. 8.

An embodiment of this application further provides a computer program product. When the computer program product runs on a computer, the computer is enabled to perform the steps performed by the vehicle in the methods described in the embodiments shown in FIG. 2 to FIG. 8.

An embodiment of this application further provides a circuit system. The circuit system includes a processing circuit. The processing circuit is configured to perform the steps performed by the vehicle in the methods described in the embodiments shown in FIG. 2 to FIG. 8.

The apparatus for adjusting a seat in a vehicle or the autonomous driving vehicle provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip in a server to perform the steps performed by the vehicle described in the embodiments shown in FIG. 2 to FIG. 8. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

The processor mentioned above may be a general-purpose central processing unit, a microprocessor, an ASIC, or one or more integrated circuits configured to control program execution of the method in the first aspect.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CLU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A method for adjusting a seat in a vehicle, wherein the method comprises:

   obtaining a first position of eyes of a user in a vehicle and a position of a first point in the vehicle, wherein a position relationship between the first point and a seat in which the user is located is preset;
   determining a first value of a distance between the first point and the eyes of the user based on the first position and the position of the first point; and
   determining adjustment information of the seat based on the first value, and performing an adjustment operation on the seat based on the adjustment information of the seat.

2. The method according to claim 1, wherein the first point represents a position of a tailbone when the user sits in the seat, the first value represents an eye height of the user in a sitting posture, the position of the first point is calculated based on a movement parameter of the seat, and the movement parameter of the seat comprises a movement parameter of a current position of the seat relative to a preset position.

3. The method according to claim 1 or 2, wherein a first mapping relationship is configured in the vehicle, the first mapping relationship indicates a lower limb size corresponding to each of a plurality of value parameters of a first distance, the first distance indicates the distance between the first point and the eyes of the user, and the determining adjustment information of the seat based on the first value of the distance between the first point and the eyes of the user comprises:

   obtaining, based on the first mapping relationship, a lower limb size corresponding to the first value; and
   determining the adjustment information of the seat based on the first value of the distance between the first point and the eyes of the user and the lower limb size corresponding to the first value.

4. The method according to claim 3, wherein if the user is a driver, when the user is located in the seat on which the adjustment operation has been performed, and a foot of the user is placed on an accelerator pedal in the vehicle, an included angle between a calf and an instep of the user is within a first preset range, and/or an included angle between the calf of the user and a first straight line is within a second preset range, wherein the first straight line is perpendicular to a vehicle body floor of the vehicle.

5. The method according to claim 1 or 2, wherein if the user is a driver, the method further comprises:

   determining a first area in the vehicle, wherein when the eyes of the user are in the first area, a field of view of the user satisfies a first constraint condition, and the first constraint condition is related to driving safety of the user; and
   the determining adjustment information of the seat based on the first value of the distance between the first point and the eyes of the user comprises:
   determining the adjustment information of the seat based on the first value and the first area, wherein when the user is located in the seat on which the adjustment operation has been performed, the eyes of the user are in the first area.

6. The method according to claim 1 or 2, wherein after the performing an adjustment operation on the seat based on the adjustment information of the seat, the method further comprises:

   obtaining a second position of the eyes of the user, wherein the second position is a position of the eyes when the user is located in the seat on which the adjustment operation has been performed, the first position is a position of the eyes of the user when the adjustment operation has not been performed, and the second position is calculated based on the first position; and determining adjustment information of a rear view mirror of the vehicle based on the second position of the eyes of the user.

7. The method according to claim 1 or 2, wherein if the user is a driver, after the performing an adjustment operation on the seat based on the adjustment information of the seat, the method further comprises:

determining adjustment information of a steering wheel of the vehicle based on a second position of the eyes of the user, wherein the second position is a position of the eyes when the user is located in the seat on which the adjustment operation has been performed, and the first position is a position of the eyes of the user when the adjustment operation has not been performed; and
performing an adjustment operation on the steering wheel of the vehicle based on the adjustment information of the steering wheel, wherein after the adjustment operation is performed on the steering wheel, a field of view of the user satisfies a first constraint condition, and/or an upper limb of the user satisfies a second constraint condition, wherein the first constraint condition is related to driving safety of the user, and the second constraint condition is related to driving comfort of the upper limb of the user.

8. The method according to claim 1 or 2, wherein the method further comprises:
obtaining a body thickness of the user, and determining a distance threshold between a first door of the vehicle and a closest obstacle and/or a minimum angle threshold of the first door of the vehicle based on the body thickness of the user, wherein the first door comprises a door closest to the user in a plurality of doors of the vehicle, and the distance threshold indicates a minimum distance between the first door and the closest obstacle after a parking operation is completed.

9. The method according to claim 8, wherein the obtaining a body thickness of the user comprises:
obtaining the body thickness of the user based on the first value.

10. A parking method, wherein the method comprises:

obtaining a body thickness of a user in a vehicle; and
determining a distance threshold between a first door of the vehicle and a closest obstacle based on the body thickness of the user, wherein the first door comprises a door closest to the user in a plurality of doors of the vehicle, and the distance threshold indicates a minimum distance between the first door and the closest obstacle after a parking operation is completed.

11. The method according to claim 10, wherein the method further comprises:

obtaining a first position of eyes of the user in the vehicle and a position of a first point in the vehicle, wherein a position relationship between the first point and a seat in which the user is located is preset;
determining a first value of a distance between the first point and the eyes of the user based on the first position and the position of the first point; and
determining adjustment information of the seat based on the first value, and performing an adjustment operation on the seat based on the adjustment information of the seat.

12. An apparatus for adjusting a seat in a vehicle, wherein the apparatus comprises:

an obtaining module, configured to obtain a first position of eyes of a user in a vehicle and a position of a first point in the vehicle, wherein a position relationship between the first point and a seat in which the user is located is preset;
a determining module, configured to determine a first value of a distance between the first point and the eyes of the user based on the first position and the position of the first point, wherein
the determining module is further configured to determine adjustment information of the seat based on the first value; and
an adjustment module, configured to perform an adjustment operation on the seat based on the adjustment information of the seat.

13. The apparatus according to claim 12, wherein the first point represents a position of a tailbone when the user sits in the seat, the first value represents an eye height of the user in a sitting posture, the position of the first point is calculated based on a movement parameter of the seat, and the movement parameter of the seat comprises a movement parameter of a current position of the seat relative to a preset position.

14. The apparatus according to claim 12 or 13, wherein a first mapping relationship is configured in the vehicle, the first mapping relationship indicates a lower limb size corresponding to each of a plurality of value parameters of a first distance, the first distance indicates the distance between the first point and the eyes of the user, and the determining module is specifically configured to:

> obtain, based on the first mapping relationship, a lower limb size corresponding to the first value; and
> determine the adjustment information of the seat based on the first value of the distance between the first point and the eyes of the user and the lower limb size corresponding to the first value.

15. The apparatus according to claim 14, wherein if the user is a driver, when the user is located in the seat on which the adjustment operation has been performed, and a foot of the user is placed on an accelerator pedal in the vehicle, an included angle between a calf and an instep of the user is within a first preset range, and/or an included angle between the calf of the user and a first straight line is within a second preset range, wherein the first straight line is perpendicular to a vehicle body floor of the vehicle.

16. The apparatus according to claim 12 or 13, wherein if the user is a driver, the determining module is further configured to determine a first area in the vehicle, wherein when the eyes of the user are in the first area, it indicates that a field of view of the user satisfies a first constraint condition, and the first constraint condition is related to driving safety of the user; and
the determining module is specifically configured to determine the adjustment information of the seat based on the first value and the first area, wherein when the user is located in the seat on which the adjustment operation has been performed, the eyes of the user are in the first area.

17. The apparatus according to claim 12 or 13, wherein

> the obtaining module is further configured to obtain a second position of the eyes of the user, wherein the second position is a position of the eyes when the user is located in the seat on which the adjustment operation has been performed, the first position is a position of the eyes of the user when the adjustment operation has not been performed, and the second position is calculated based on the first position; and
> the determining module is further configured to determine adjustment information of a rear view mirror of the vehicle based on the second position of the eyes of the user.

18. The apparatus according to claim 12 or 13, wherein if the user is a driver, the determining module is further configured to determine adjustment information of a steering wheel of the vehicle based on a second position of the eyes of the user, wherein the second position is a position of the eyes when the user is located in the seat on which the adjustment operation has been performed, and the first position is a position of the eyes of the user when the adjustment operation has not been performed; and
the adjustment module is further configured to perform an adjustment operation on the steering wheel of the vehicle based on the adjustment information of the steering wheel, wherein after the adjustment operation is performed on the steering wheel, a field of view of the user satisfies a first constraint condition, and/or an upper limb of the user satisfies a second constraint condition, wherein the first constraint condition is related to driving safety of the user, and the second constraint condition is related to driving comfort of the upper limb of the user.

19. The apparatus according to claim 12 or 13, wherein

> the obtaining module is further configured to obtain a body thickness of the user; and
> the determining module is further configured to determine a distance threshold between a first door of the vehicle and a closest obstacle and/or a minimum angle threshold of the first door of the vehicle based on the body thickness of the user, wherein the first door comprises a door closest to the user in a plurality of doors of the vehicle, and the distance threshold indicates a minimum distance between the first door and the closest obstacle after a parking operation is completed.

20. The apparatus according to claim 19, wherein the obtaining module is specifically configured to obtain the body thickness of the user based on the first value.

21. A vehicle, comprising a processor, wherein the processor is coupled to a memory, the memory stores program instructions, and when the program instructions stored in the memory are executed by the processor, the method according to any one of claims 1 to 11 is implemented.

22. A computer-readable storage medium, comprising a program, wherein when the program is run on a computer, the computer is enabled to perform the method according to any one of claims 1 to 11.

23. A circuit system, wherein the circuit system comprises a processing circuit, and the processing circuit is configured to perform the method according to any one of claims 1 to 11.

## Vehicle 10

### Travel system 102

- Engine 118
- Energy source 119
- Transmission apparatus 120
- Wheel 121

### Sensor system 104

- Global positioning system 122
- Inertial measurement unit 124
- Radar 126
- Laser rangefinder 128
- Camera 130

### Control system 106

- Steering system 132
- Accelerator 134
- Brake unit 136
- Computer vision system 140
- Route control system 142
  - Horizontal planning module 1421
  - Longitudinal planning module 1422
- Obstacle avoidance system 144

### Peripheral device 108

- Wireless communication system 146
- In-vehicle computer 148
- Microphone 150
- Speaker 152

### Computer system 112

- Processor 113
- Memory 114
  - Instruction 115

Power supply 110

User interface 116

FIG. 1

EP 4 566 876 A1

Obtain a first position of eyes of a target user in a vehicle $\diagup$ 201

Obtain a position of a first point corresponding to the target user in the vehicle, where a position relationship between the first point and a seat in which the target user is located is preset $\diagup$ 202

Determine a first value of a distance between the first point and the eyes of the target user based on the first position and the position of the first point $\diagup$ 203

Determine, based on the first value, adjustment information of the seat in which the target user is located, and perform, based on the adjustment information of the seat in which the target user is located, an adjustment operation on the seat in which the target user is located $\diagup$ 204

FIG. 2

Obtain a first position of eyes of a user in a vehicle 301

Obtain a position of a first point in the vehicle, where a position relationship between the first point and a seat in which the user is located is preset 302

Determine a first value of a distance between the first point and the eyes of the user based on the first position of the eyes of the user and the position of the first point 303

Determine a first area in the vehicle, where when the eyes of the user are in the first area, it indicates that a field of view of the user satisfies a first constraint condition, and the first constraint condition is related to driving safety of the user 304

Obtain a lower limb size of the target user 305

Determine adjustment information of the seat based on the first value of the distance between the first point and the eyes of the user 306

Perform an adjustment operation on the seat based on the adjustment information of the seat 307

Obtain a second position of the eyes of the user, where the second position is a position of the eyes when the user is in the seat on which the adjustment operation has been performed, and the first position is a position of the eyes of the user when the adjustment operation has not been performed 308

Determine adjustment information of a rear view mirror of the vehicle based on the second position of the eyes of the user 309

Determine adjustment information of a steering wheel of the vehicle 310

Obtain a body thickness of the user 311

Determine a distance threshold between a first door of the vehicle and a closest obstacle and/or a minimum angle threshold of the first door based on the body thickness of the user, where the first door includes a door that is closest to the user in a plurality of doors of the vehicle, and the distance threshold indicates a minimum distance between the first door and the closest obstacle after a parking operation is completed 312

FIG. 3

y-axis

z-axis

x-axis

FIG. 4

Represent a first area

FIG. 5

First area

$\alpha_1$

$l_3$

F1

Thigh

$l_2$

Calf

$\alpha_{33}$

F2

Point H

Accelerator
pedal of a
vehicle

$l_1$

$\alpha_{31}$min

$\alpha_{31}$max

AHP

FIG. 6

Direction of a
support shaft of
a steering wheel

Vertical direction
of the support
shaft of the
steering wheel

FIG. 7

FIG. 8

900

| Apparatus for adjusting a seat in a vehicle | | |
|---|---|---|
| Obtaining module 901 | Determining module 902 | Adjustment module 903 |

FIG. 9

1000

Parking apparatus

Obtaining module
1001

Determining module
1002

FIG. 10

11

Vehicle

Antenna

Antenna

Receiver 1101

Transmitter 1102

Processor 113

Memory
114

Application
processor
1131

Communication
processor
1132

FIG. 11

## INTERNATIONAL SEARCH REPORT

| International application No. |
| --- |
| **PCT/CN2023/139365** |

**A. CLASSIFICATION OF SUBJECT MATTER**

B60N2/02(2006.01)i

According to International Patent Classification (IPC) or to both national classification and IPC

**B. FIELDS SEARCHED**

Minimum documentation searched (classification system followed by classification symbols)

IPC: B60N

Documentation searched other than minimum documentation to the extent that such documents are included in the fields searched

Electronic data base consulted during the international search (name of data base and, where practicable, search terms used)

CNTXT, ENTXTC, CNKI: 车座, 座椅, 调节, 调整, 眼, 位置, 高度, 坐标, 距离, 间距; ENTXT, VEN: seat, adjust, regulate, eye, position, high, height, coordinate, distance.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115923606 A (HUAWEI TECHNOLOGIES CO., LTD.) 07 April 2023 (2023-04-07) claims 1-23, and description, paragraphs 51-252, and figures 1-11 | 1-9, 12-23 |
| X | JP 2021160644 A (MAZDA MOTOR CORPORATION) 11 October 2021 (2021-10-11) description, paragraphs 8-122, and figures 1-11 | 1-9, 12-23 |
| X | CN 115243929 A (MAZDA MOTOR CORPORATION) 25 October 2022 (2022-10-25) description, paragraphs 19-83, and figures 1-7 | 1-9, 12-23 |
| A | CN 103359000 A (BAIC MOTOR CO., LTD.) 23 October 2013 (2013-10-23) entire document | 1-9, 12-23 |
| A | CN 109774728 A (DONGFENG MOTOR CORPORATION) 21 May 2019 (2019-05-21) entire document | 1-9, 12-23 |
| A | US 2021237620 A1 (TS TECH CO., LTD.) 05 August 2021 (2021-08-05) entire document | 1-9, 12-23 |
| A | CN 114801903 A (DONGFENG MOTOR GROUP CO., LTD.) 29 July 2022 (2022-07-29) entire document | 1-9, 12-23 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 March 2024** | **23 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/139365**

### C. DOCUMENTS CONSIDERED TO BE RELEVANT

| Category* | Citation of document, with indication, where appropriate, of the relevant passages | Relevant to claim No. |
|---|---|---|
| A | CN 113335146 A (VOLVO CAR CORP.) 03 September 2021 (2021-09-03)<br>entire document | 1-9, 12-23 |
| A | US 2006206251 A1 (BARKER STEPHEN D. et al.) 14 September 2006 (2006-09-14)<br>entire document | 1-9, 12-23 |
| A | KR 20140067466 A (HYUNDAI MOTOR CO., LTD.) 05 June 2014 (2014-06-05)<br>entire document | 1-9, 12-23 |
| A | CN 111002926 A (BAIC GROUP ORV CO., LTD.) 14 April 2020 (2020-04-14)<br>entire document | 1-9, 12-23 |

**INTERNATIONAL SEARCH REPORT**

| International application No. |
| --- |
| **PCT/CN2023/139365** |

| **Box No. III**      **Observations where unity of invention is lacking (Continuation of item 3 of first sheet)** |
| --- |

This International Searching Authority found multiple inventions in this international application, as follows:

Claims 1-9 and 12-20, and claims 21-23, which refer to any one of claims 1-9 relate to an adjustment method for a seat in a vehicle, an adjustment device for a seat in a vehicle, a vehicle executing the adjustment method, a computer-readable storage medium, and a circuit system. Claims 10-11, and claims 21-23, which refer to any one of claims 10-11 relate to a parking method, a vehicle executing the parking method, a computer-readable storage medium, and a circuit system.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-9 and 12-20, and claims 21-23, which refer to claims 1-9**

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/139365**

| Patent document cited in search report | | | Publication date (day/month/year) | Patent family member(s) | | | Publication date (day/month/year) |
|---|---|---|---|---|---|---|---|
| CN | 115923606 | A | 07 April 2023 | None | | | |
| JP | 2021160644 | A | 11 October 2021 | None | | | |
| CN | 115243929 | A | 25 October 2022 | US | 2023166637 | A1 | 01 June 2023 |
| | | | | WO | 2021199729 | A1 | 07 October 2021 |
| | | | | JP | 2021160643 | A | 11 October 2021 |
| | | | | EP | 4129755 | A1 | 08 February 2023 |
| | | | | CN | 115243929 | B | 03 November 2023 |
| CN | 103359000 | A | 23 October 2013 | CN | 103359000 | B | 27 January 2016 |
| CN | 109774728 | A | 21 May 2019 | CN | 109774728 | B | 24 November 2020 |
| US | 2021237620 | A1 | 05 August 2021 | US | 11491895 | B2 | 08 November 2022 |
| | | | | WO | 2019208764 | A1 | 31 October 2019 |
| | | | | JP | 2019194062 | A | 07 November 2019 |
| | | | | JP | 2019194063 | A | 07 November 2019 |
| | | | | JP | 7164812 | B2 | 02 November 2022 |
| | | | | JP | 2022183318 | A | 08 December 2022 |
| | | | | US | 2023038920 | A1 | 09 February 2023 |
| | | | | US | 2023322129 | A1 | 12 October 2023 |
| CN | 114801903 | A | 29 July 2022 | CN | 114801903 | B | 14 March 2023 |
| CN | 113335146 | A | 03 September 2021 | CN | 113335146 | B | 21 March 2023 |
| | | | | EP | 3875320 | A1 | 08 September 2021 |
| | | | | US | 2021276501 | A1 | 09 September 2021 |
| | | | | US | 11673520 | B2 | 13 June 2023 |
| US | 2006206251 | A1 | 14 September 2006 | US | 7830245 | B2 | 09 November 2010 |
| | | | | WO | 2006099428 | A2 | 21 September 2006 |
| | | | | WO | 2006099428 | A3 | 18 May 2007 |
| KR | 20140067466 | A | 05 June 2014 | KR | 101927156 | B1 | 10 December 2018 |
| CN | 111002926 | A | 14 April 2020 | None | | | |

Form PCT/ISA/210 (patent family annex) (July 2022)

**REFERENCES CITED IN THE DESCRIPTION**

**Patent documents cited in the description**

- CN 202211634012